# EUROPEAN PATENT APPLICATION

(11) **EP 2 752 801 A1**
(43) Date of publication of application: **09.07.2014**
(21) Application number: 12826791.1
(22) Date of filing: 10.07.2012
(51) Int. Cl.: G06Q 30/02, G06Q 30/08

(54) **ADVERTISEMENT SYSTEM, CONTROL METHOD FOR ADVERTISEMENT SYSTEM, ADVERTISEMENT CONTROL DEVICE, CONTROL METHOD FOR ADVERTISEMENT CONTROL DEVICE, PROGRAM, AND INFORMATION STORAGE MEDIUM**

(30) Priority: 31.08.2011 JP 2011190150
(71) Applicant: Rakuten, Inc., Tokyo 140-0002 (JP)
(72) Inventor: OZAKI, Shimpei, Tokyo 140-0002 (JP)
(74) Representative: HOFFMANN EITLE
(86) International application number: PCT/JP2012/067570
(87) International publication number: WO 2013/031387

(57) **Abstract**

Provided is an advertisement system capable of selecting, for example, advertisements with a high bid price as advertisements to be shown in an advertisement area, without executing processing for sorting advertisements by a bid price as a key. A storage unit (70) stores a bid price designated by an advertiser so as to be correlated to each of a plurality of advertisements that are candidates for the advertisements to be shown in the advertisement area set in content. A determination unit (72) determines whether or not a bid price of an advertisement is higher than a threshold. An advertisement selection unit (78) selects advertisements with a bid price higher than the threshold among the plurality of advertisement as the advertisements to be shown in the advertisement area, based on the result of determination by the determination unit (72).

## Description

### TECHNICAL FIELD

The present invention relates to an advertisement system, a control method for an advertisement system, an advertisement control device, a control method for an advertisement control device, a program, and an information storage medium.

### BACKGROUND ART

There has been known an advertisement system for providing a user with content where an advertisement area for showing advertisements is set. The above described advertisement system receives an application from each of a plurality of advertisers, and selects advertisements to be shown in content from among a plurality of advertisements. For example, Patent Literature 1 discloses that an advertisement to be shown in content is sequentially selected, beginning with one with a higher bit price, in order to show in content an advertisement with a high bit price offered by an advertiser.

### CITATION LIST

### PATENT LITERATURE

Patent Literature 1: JP 2003-501729 A

### SUMMARY OF INVENTION

### Technical Problem

According to the system described in Patent Literature 1, for example, in order to select advertisements with a high bid price as the advertisements to be shown in the content, it is necessary to execute processing for sorting a plurality of advertisements by a bit price as a key. In such sorting processing, processing of "determining which bit price of two advertisements is higher and then reordering the advertisements based on the result of determination" is repetitively executed, whereby a plurality of advertisements are sorted to be arranged in an order of higher bid price. As a result, a heavy processing lord may be resulted in processing for selecting advertisements.

The present invention has been conceived in view of the above, and aims to provide an advertisement system, a control method for an advertisement system, an advertisement control device, a control method for an advertisement control device, a program, and an information storage medium capable of selecting advertisements with a high bid price as advertisements to be shown in an advertisement area in content without executing processing for sorting a plurality of advertisements by a bid price as a key.

### Solution to Problem

In order to attain the above described object, an advertisement system according to the present invention is an advertisement system for providing a user with content in which an advertisement area for showing advertisements is set, the advertisement system including bid price storage means for storing a bid price designated by an advertiser so as to be correlated to each of a plurality of advertisements that are candidates for the advertisements to be shown in the advertisement area; determination means for determining whether or not the bid price of an advertisement is higher than a threshold; and advertisement selection means for selecting advertisements with a bid price higher than the threshold among the plurality of advertisements as the advertisements to be shown in the advertisement area, based on a result of determination by the determination means.

Further, a control method for an advertisement system according to the present invention is a control method for an advertisement system for providing a user with content in which an advertisement area is set, the control method including a determination step of determining whether or not a bid price of an advertisement is higher than a threshold, based on content stored in bid price storage means for storing a bid price of each of a plurality of advertisements that are candidates for advertisements to be shown in the advertisement area; and an advertisement selection step of selecting advertisements with a bid price higher than the threshold among the plurality of advertisements as the advertisements to be shown in the advertisement area, based on a result of determination at the determination step.

Further, an advertisement control device according to the present invention is an advertisement control device for selecting advertisements to be shown in an advertisement area set in content from among a plurality of advertisements, the advertisement control device including means for accessing bid price storage means for storing a bid price of each of a plurality of advertisements; and advertisement selection means for selecting advertisements with a bid price higher than a threshold among the plurality of advertisements as the advertisements to be shown in the advertisement area, based on a result of determination as to whether or not the bid price of the advertisement is higher than the threshold.

Further, a control method for an advertisement control device according to the present invention is a control method for an advertisement control device for selecting advertisements to be shown in an advertisement area set in content from among a plurality of advertisements, the control method including a step of accessing bid price storage means for storing a bid price of each of a plurality of advertisements; and an advertisement selection step of selecting advertisements with a bid price higher than a threshold among the plurality of advertisements as the advertisements to be shown in the advertisement area, based on a result of determination as to whether or not the bid price of the advertisement is higher than the threshold.

Further, a program according to the present invention is a program for causing a computer to function as an advertisement control device for selecting advertisements to be shown in an advertisement area set in content from among a plurality of advertisements, the program for causing the computer to function as means for accessing bid price storage means for storing a bid price of each of a plurality of advertisements; and an advertisement selection means for selecting advertisements with a bid price higher than a threshold among the plurality of advertisements as the advertisements to be shown in the advertisement area, based on a result of determination as to whether or not the bid price of the advertisement is higher than the threshold.

Further, an information storage medium according to the present invention is a computer readable information storage medium storing the above described program.

According to one aspect of the present invention, the advertisement system may further include comparison means for comparing a number of advertisements with the bid price higher than the threshold among the plurality of advertisements with a number of advertisements to be shown in the advertisement area, wherein the advertisement selection means may select the advertisement with the bid price higher than the threshold among the plurality of advertisements as an advertisement to be shown in the advertisement area, based on a result of comparison by the comparison means.

According to one aspect of the present invention, in the case where the number of the advertisements with the bid price higher than the threshold among the plurality of advertisements is equal to the number of advertisements to be shown in the advertisement area, the advertisement selection means may select the advertisement with the bid price higher than the threshold among the plurality of advertisements as an advertisement to be shown in the advertisement area.

According to one aspect of the present invention, the advertisement system may further include a threshold changing means for changing the threshold.

According to one aspect of the present invention, the threshold changing means may change the threshold in order to have a number of advertisements with the bid price higher than the threshold among the plurality of advertisements to be equal to a number of advertisements to be shown in the advertisement area.

According to one aspect of the present invention, in the case where a number of advertisements with the bid price higher than the threshold among the plurality of advertisements is not equal to a number of advertisements to be shown in the advertisement area, the threshold changing means may change the threshold.

According to one aspect of the present invention, in the case where the number of the advertisements with the bid price higher than the threshold among the plurality of advertisements is larger than the number of advertisements to be shown in the advertisement area, the threshold changing means may set a value higher than the threshold as a new threshold.

According to one aspect of the present invention, in the case where the number of the advertisements with the bid price higher than the threshold among the plurality of advertisements is larger than the number of advertisements to be shown in the advertisement area, the threshold changing means may set the new threshold, based on a statistical value of the bid prices of the advertisements with the bid price higher than the threshold among the plurality of advertisements.

According to one aspect of the present invention, in the case where the threshold is set to a first value and a number of advertisements with a bid price higher than the first value among the plurality of advertisements is larger than the number of advertisements to be shown in the advertisement area, the threshold changing means may set a second value higher than the first value as the new threshold, in the case where the second value is set as the new threshold and a number of advertisements with a bid price higher than the second value among the plurality of advertisements is smaller than the number of advertisements to be shown in the advertisement area, the threshold changing means may set a third value lower than the second value and higher than the first value as the new threshold, and in the case where the third value is set as the new threshold, the advertisement selection means may select advertisements with a bid price higher than the third value among the plurality of advertisements as the advertisements to be shown in the advertisement area, based on a result of comparison between a number of the advertisements with the bid price higher than the third value among the plurality of advertisements and the number of advertisements to be shown in the advertisement area.

According to one aspect of the present invention, in the case where the threshold is set to the first value and the number of the advertisements with the bid price higher than the first value among the plurality of advertisements is larger than the number of advertisements to be shown in the advertisement area, the threshold changing means may set the second value as the new threshold, the second value being a value obtained based on a statistical value of the bid prices of the advertisements with the bid price higher than the first value among the plurality of advertisements, and in the case where the number of the advertisements with the bid price higher than the second value among the plurality of advertisements is smaller than the number of advertisements to be shown in the advertisement area, the threshold changing means may set the third value as the new threshold, the third value being a value obtained based on a statistical value of the bid prices of advertisements with a bid price higher than the first value and equal to or lower than the second value among the plurality of advertisements.

According to one aspect of the present invention, in the case where a number of advertisements with the bid price higher than the threshold among the plurality of advertisements is smaller than a number of the advertisements to be shown in the advertisement area, the threshold changing means may set a value lower than the threshold as a new threshold.

According to one aspect of the present invention, in the case where the number of the advertisements with the bid price higher than the threshold among the plurality of advertisements is smaller than the number of advertisements to be shown in the advertisement area, the threshold changing means may set the new threshold based on a statistical value of the bid prices of advertisements with a bid price equal to or lower than the threshold among the plurality of advertisements.

According to one aspect of the present invention, in the case where the threshold is set to a first value and a number of advertisements with a bid price higher than the first value among the plurality of advertisements is smaller than the number of advertisements to be shown in the advertisement area, the threshold changing means may set a second value lower than the first value as the new threshold, in the case where the second value is set as the new threshold, and a number of advertisements with a bid price higher than the second value among the plurality of advertisements is larger than the number of advertisements to be shown in the advertisement area, the threshold changing means may set a third value higher than the second value and lower than the first value as the new threshold, and in the case where the third value is set as the new threshold, the advertisement selection means may select advertisements with the a price higher than the third value among the plurality of advertisements as the advertisements to be shown in the advertisement area, based on a result of comparison between a number of the advertisements with the bid price higher than the third value among the plurality of advertisements and the number of advertisements to be shown in the advertisement area.

According to one aspect of the present invention, in the case where the threshold is set to the first value and the number of the advertisements with the bid price higher than the first value among the plurality of advertisements is smaller than the number of advertisements to be shown in the advertisement area, the threshold changing means may set the second value as the new threshold, the second value being a value obtained based on a statistical value of the bid prices of advertisements with a bid price equal to or lower than the first value among the plurality of advertisements, and in the case where the number of the advertisements with the bid price higher than the second value among the plurality of advertisements is larger than the number of advertisements to be shown in the advertisement area, the threshold changing means may set the third value as the new threshold, the third value being a value obtained based on a statistical value of the bid prices of advertisements with a bid price higher than the second value and equal to or lower than the first value among the plurality of advertisements.

According to one aspect of the present invention, the advertisement system may further include means for setting an initial value of the threshold based on a statistical value of the bid prices of the plurality of advertisements.

According to one aspect of the present invention, the advertisement system may further include an index value information storage means for storing index value information concerning an advertisement effect index value so as to be correlated to each of the plurality of advertisements, and in the case where the threshold changing means changes the threshold, and a number of advertisements with the bid price higher than the threshold among the plurality of advertisements is larger than a number of advertisements to be shown in the advertisement area, the advertisement selection means may select the advertisements to be shown in the advertisement area from among the advertisements with the bid price higher than the threshold among the plurality of advertisements, based on the index value information on each of the advertisements with the bid price higher than the threshold among the plurality of advertisements.

According to one aspect of the present invention, the advertisement effect index value may include at least one of a click through rate, a conversion rate, and a total price of a product or a service actually bought via an advertisement shown in the advertisement area in the content.

According to one aspect of the present invention, the advertisement system may further include a means for increasing the number of advertisements to be shown in the advertisement area to at least the number of the advertisements with the bid price higher than the threshold among the plurality of advertisements, in the case where a number of the advertisements with the bid price higher than the threshold among the plurality of advertisements is larger than a number of advertisements to be shown in the advertisement area, a number of advertisements with a lowest bid price among the advertisements with the bid price higher than the threshold is two or more, and a number of advertisements other than the advertisement with the lowest bid price among the advertisements with the bid price higher than the threshold is smaller than the number of advertisements to be shown in the advertisement area.

According to one aspect of the present invention, a first advertisement area and a second advertisement area may be set in the content, the comparison means may compare a number of advertisements with a bid price higher than a first threshold among the plurality of advertisements and a number of advertisements to be shown in the first advertisement area, the advertisement selection means may select the advertisements with the bid price higher than the first threshold among the plurality of advertisements as the advertisements to be shown in the first advertisement area, based on a result of comparison by the comparison means, the advertisement system may further include a means for setting a value lower than the first threshold as a second threshold, in the case where the advertisement with the bid price higher than the first threshold among the plurality of advertisements is selected as the advertisements to be shown in the first advertisement area, in the case where the second threshold is set, the comparison means may compare a number of advertisements with a bid price higher than the second threshold and equal to or lower than the first threshold among the plurality of advertisements with a number of advertisements to be shown in the second advertisement area, and the advertisement selection means may select the advertisements with the bid price higher than the second threshold and equal to or lower than the first threshold among the plurality of advertisements as the advertisements to be shown in the second advertisement area, based on a result of comparison by the comparison means.

According to one aspect of the present invention, the advertisement system may further include a means for changing the first threshold, based on a result of comparison between the number of advertisements with the bid price higher than the first threshold among the plurality of advertisements and the number of advertisements to be shown in the first advertisement area, in the case where the first threshold is changed, the comparison means may compare a number of advertisements with the bid price higher than the first threshold among the plurality of advertisements and the number of advertisements to be shown in the first advertisement area, the advertisement selection means may select the advertisement with the bid price higher than the first threshold among the plurality of advertisements as the advertisements to be shown in the first advertisement area, based on a result of comparison by the comparison means in th case where the first threshold is changed, the advertisement system may further include a means for changing the second threshold, based on a result of comparison between the number of advertisements with a bid price higher than the second threshold and equal to or lower than the first threshold among the plurality of advertisements and the number of advertisements to be shown in the second advertisement area, in the case where the second threshold is changed, the comparison means may compare a number of advertisements with the bid price higher than the second threshold and equal to or lower than the first threshold among the plurality of advertisements and the number of advertisements to be shown in the second advertisement area, and the advertisement selection means may select the advertisements with the bid price higher than the second threshold and equal to or lower than the first threshold among the plurality of advertisements as the advertisements to be shown in the second advertisement area, based on a result of comparison by the comparison means in the case where the second threshold is changed.

According to one aspect of the present invention, the advertisement system may further include an index value information storage means for storing index value information concerning an advertisement effect index value so as to be correlated to each of the plurality of advertisements, the advertisements selected by the advertisement selection means from among the plurality of advertisements may be shown in the advertisement area, and the advertisement system may further include display position determination means for determining a display position in the advertisement area of each of the advertisements selected by the advertisement selection means, based on the index value information of each of the plurality of advertisements selected by the advertisement selection means.

According to one aspect of the present invention, the advertisement effect index value may include at least one of a click through rate, a conversion rate, and a total price of a product or a service actually bought via an advertisement shown in the advertisement area in the content.

### Advantageous Effects of Invention

According to the present invention, for example, it is possible to select an advertisement with a high bid price as an advertisement to be shown in an advertisement area in content, without executing processing for sorting a plurality of advertisements by a bid price as a key.

### BRIEF DESCRIPTION OF DRAWINGS

FIG. 1 shows an overall structure of an e-commerce system according to an embodiment of the present invention;
FIG. 2 shows one example of a product list page;
FIG. 3A explains scroll of an advertisement area;
FIG. 3B explains scroll of the advertisement area;
FIG. 3C explains scroll of the advertisement area;
FIG. 3D explains scroll of the advertisement area;
FIG. 3E explains scroll of the advertisement area;
FIG. 4 shows one example of a product list page when a user tries to input a keyword;
FIG. 5 shows one example of a shop table;
FIG. 6 shows one example of a product table;
FIG. 7 shows one example of an advertisement table;
FIG. 8 shows one example of a keyword table;
FIG. 9 shows one example of an advertisement area table;
FIG. 10 shows one example of an index value table;
FIG. 11 shows one example of information indicating a correspondence relation between a click through rate and an evaluation value;
FIG. 12 shows one example of information indicating a correspondence relation between a conversion rate and an evaluation value;
FIG. 13 shows one example of information indicating a correspondence relation between a purchase price and an evaluation value;
FIG. 14 is a functional block diagram of the e-commerce system according to the embodiment of the present invention;
FIG. 15 explains a process of advertisement selection;
FIG. 16 explains a process of advertisement selection;
FIG. 17 explains a process of advertisement selection;
FIG. 18 explains one example of processing executed in the e-commerce system;
FIG. 19 is a flowchart showing one example of advertisement selection processing;
FIG. 20 is a flowchart showing one example of advertisement selection processing;
FIG. 21 is a flowchart showing one example of advertisement selection processing;
FIG. 22 explains a process of advertisement selection;
FIG. 23 explains a process of advertisement selection;
FIG. 24 is a flowchart showing another example of advertisement selection processing;
FIG. 25 is a flowchart showing another example of advertisement selection processing;
FIG. 26 explains a process of advertisement selection;
FIG. 27 is a flowchart showing another example of advertisement selection processing;
FIG. 28 is a flowchart showing another example of advertisement selection processing;
FIG. 29 is a flowchart showing another example of advertisement selection processing; and
FIG. 30 is a flowchart showing another example of advertisement selection processing.

### DESCRIPTION OF EMBODIMENTS

In the following, an example of an embodiment of the present invention will be described in detail based on the drawings.

Below, a case will be described in which an advertisement system according to the embodiment of the present invention is implemented in an e-commerce (electronic commerce) system for implementing a virtual shopping mall where a plurality of shops are open.

That is, a case will be described in which an advertisement system for providing a user with content including an advertisement area for showing (presenting) advertisements is implemented in an e-commerce system. In particular, a case will be described below in which an advertisement system for showing advertisements relevant to one or more keywords designated by a user in an advertisement area that is set in content showing a list of information items relevant to the one or more keywords (in other words, a list of information items satisfying a search condition including the one or more keywords designated by the user) is implemented in the e-commerce system.

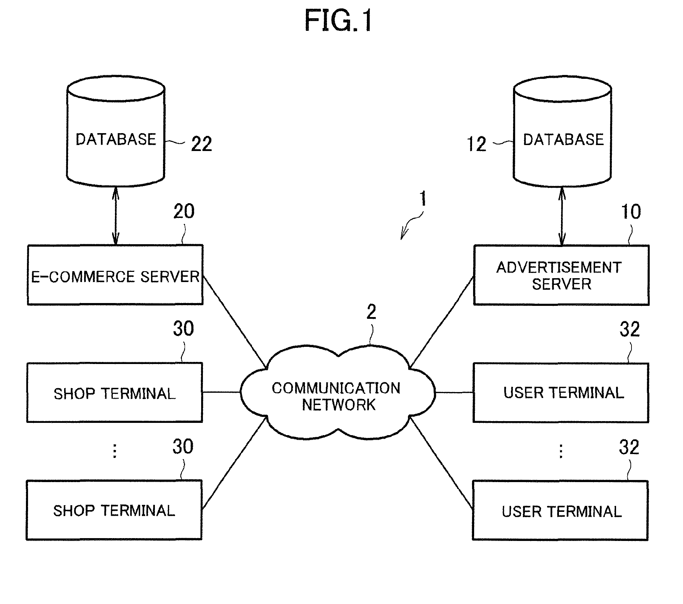

FIG. 1 shows an overall structure of an e-commerce system according to the embodiment of the present invention. As shown in FIG. 1, an e-commerce system 1 according to the embodiment includes an advertisement server 10 (advertisement control device), a database 12, an e-commerce server 20, a database 22, a plurality of shop terminals 30, and a plurality of user terminals 32. The advertisement server 10, the e-commerce server 20, the plurality of shop terminals 30, and the plurality of user terminal 32 are connected to a communication network 2 including the Internet, or the like, for example. Mutual data communication is possible also between the advertisement server 10 and the e-commerce server 20. Further, mutual data communication is possible between the e-commerce server 20 and the shop terminal 30 or the user terminal 32. Still further, mutual data communication is possible also between the advertisement server 10 and the shop terminal 30 or the user terminal 32.

The e-commerce server 20 is a virtual shopping mall server that functions as a portal of a virtual shopping mall, for example. The e-commerce server 20 executes processing based on a processing request received from the shop terminal 30 or the user terminal 32.

For example, the e-commerce server 20 includes a control unit (for example, a CPU, or the like), a main memory unit (for example, a RAM, or the like), an auxiliary storage unit (for example, a hard disk), an optical disk drive, and a communication interface. The control unit executes processing according to a program stored in the auxiliary storage unit. For example, a program and data are supplied to the auxiliary storage unit via an optical disk (an information storage medium). That is, a program and data stored in an optical disk mounted in an optical disk drive are read by the optical disk drive, and then stored in the auxiliary storage unit. Note that a program and data may be supplied to the auxiliary storage unit via an information storage medium other than an optical disk (for example, a memory card). Alternatively, a program and data may be supplied to the auxiliary storage unit via the communication network 2.

The e-commerce server 20 can access the database 22. For example, data on a user using a virtual shopping mall, data on a shop open in the virtual shopping mall, data on a product dealt in the virtual shopping mall, data on a history of transactions conducted in the virtual shopping mall, and the like, are stored in the database 22. The database 22 may be created in a server computer other than the e-commerce server 20 or in the e-commerce server 20.

The shop terminal 30 is an information processing device set in a shop that is open in the virtual shopping mall. The shop terminal 30 is a personal computer, or the like, for example. The shop terminal 30 is used to register information on a product for selling in the virtual shopping mall or the like in the database 22 via the e-commerce server 20. For example, a dedicated screen provided by the e-commerce server 20 is displayed on a display unit of the shop terminal 30. A person in charge of a shop registers information or the like on a product in the database 22 via the dedicated screen.

The user terminal 32 is an information processing device to be operated by a user, and used to buy a product at the virtual shopping mall. The user terminal 32 is, for example, a personal computer, a portable phone, a portable information terminal, or the like. The user terminal 32 includes, for example, a control unit (for example, a CPU), a main memory unit (for example, a RAM), an auxiliary storage unit (for example, a hard disk or a solid state drive), a memory card slot, an operation unit, a display unit (for example, a liquid crystal display), a sound output unit (for example, a speaker), and a communication interface.

In this embodiment, for example, an HTTP daemon is activated in the e-commerce server 20. Further, a browser is activated in the shop terminal 30 or the user terminal 32, and a processing request (HTTP request) is sent from the shop terminal 30 or the user terminal 32 to the e-commerce server 20 via the browser. In return, a processing result (HTTP response) in response to the processing request is sent from the e-commerce server 20 to the shop terminal 30 or the user terminal 32. For example, page data written in a web page descriptive language is sent to the shop terminal 30 or the user terminal 32. Then, a web page (screen) based on the processing result is displayed on the display unit of the shop terminal 30 or the user terminal 32, based on the page data.

In the e-commerce system 1, one or more advertisement areas are set in a web page (content) displayed on the display unit of the user terminal 32, and advertisements selected from among a plurality of advertisements is shown in the advertisement area. The advertisement server 10 and the database 12 are used to achieve such advertisement.

The advertisement server 10 is a server computer for executing control over advertisement. Similar to the e-commerce server 20, the advertisement server 10 includes a control unit (for example, a CPU, or the like), a main memory unit (for example, a RAM, or the like), an auxiliary storage unit (for example, a hard disk), an optical disk drive, and a communication interface. The advertisement server 10 can access the database 12. Various data on advertisement is stored in the database 12.

The advertisement server 10 and the e-commerce server 20 may be implemented by different server computers or the same single server computer. The database 12 may be created in a server computer different from the advertisement server 10 or within the advertisement server 10. A provider of an advertisement service using the advertisement server 10 and the database 12 (that is, a manager managing the advertisement server 10 and the database 12) may be the same as or different from a provider of a virtual shopping mall (that is, a manager managing the e-commerce server 20 and the database 22).

A person in charge of a shop wishing to make advertisement accesses the advertisement server 10 via the shop terminal 30. In this case, a dedicated screen provided by the advertisement server 10 is displayed on the display unit of the shop terminal 30. The person in charge of the shop registers their advertisement in the database 12 via the dedicated screen.

For example, the person in charge of the shop designates a keyword to be correlated to their advertisement. For example, a person in charge from a shop selling bags designates the word "bag" as the keyword to be correlated to their advertisement. The dedicated screen is designed so as to allow selection of any pre-registered keyword, and the person in charge of the shop selects any of the pre-registered keywords. The person in charge of the shop may be able to select any keyword other than pre-registered keywords.

Further, the person in charge of the shop designates a bid price. That is, the person in charge of the shop designates as a "bid price" a price (a cost) which the shop (advertiser) pays to the provider of an advertisement service for every time when advertisement is made. For example, the person in charge of the shop designates a cost per click (CPC). A "cost per click" refers to a price which an advertiser pays to the provider of an advertisement service every time a user clicks their advertisement. The higher the bid price is, the more an advertiser pays to the provider of an advertisement service every click on their advertisement by a user. Meanwhile, the higher the bid price is, the higher the possibility in which an advertisement is displayed on the display unit of the user terminal 32 becomes, as to be described later.

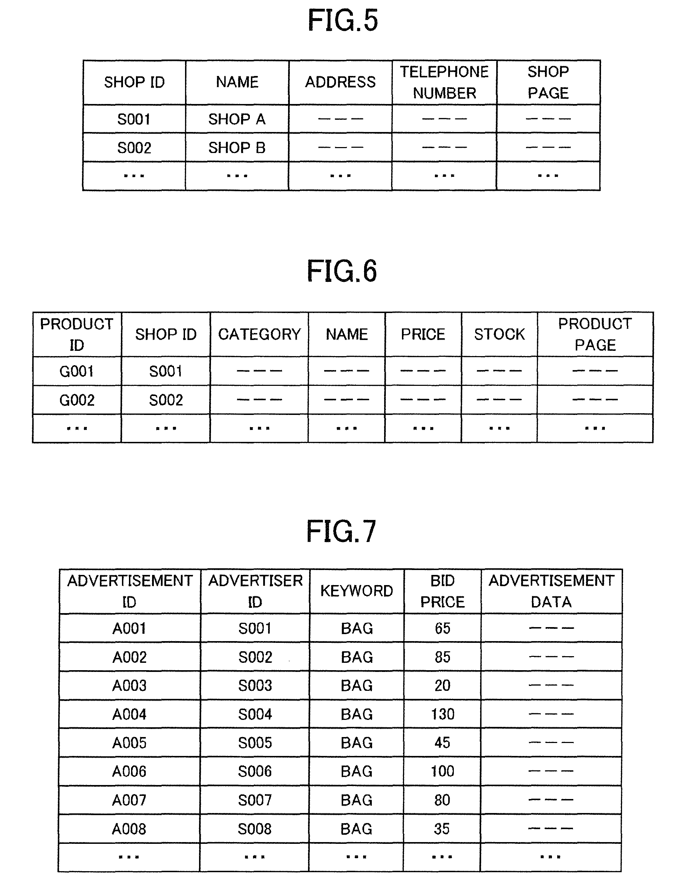

The keyword and the bid price designated by the person in charge of the shop are registered in the database 12 so as to be correlated to an advertisement of the shop (see FIG. 7 to be described later).

Meanwhile, a user using the virtual shopping mall accesses the e-commerce server 20, using the user terminal 32. In this case, for example, product search page data for searching for a product is sent from the e-commerce server 20 to the user terminal 32, and a product search page (not shown) is displayed on the display unit of the user terminal 32. A user designates a search condition, such as a keyword or the like, and clicks a search button in the product search page to search for a desired product, and buys the product.

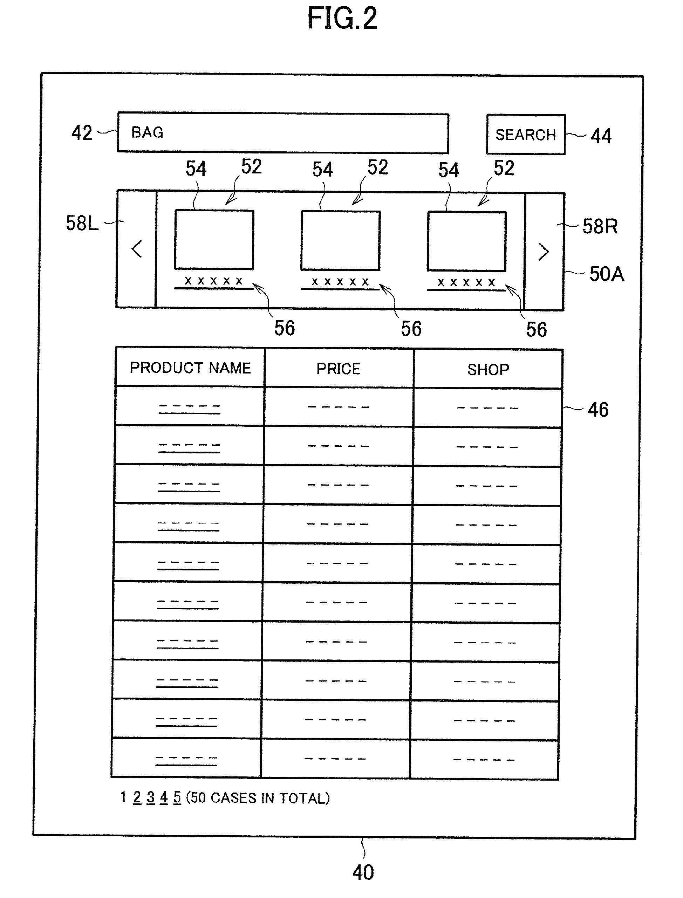

FIG. 2 shows one example of the product list page displayed on the display unit of the user terminal 32 when a user designates a keyword and clicks the search button in the product search page. Specifically, FIG. 2 shows one example of the product list page 40 that is displayed when the word "bag" is designated as the keyword.

As shown in FIG. 2, the product list page 40 includes a keyword space 42, a search button 44, and a list area 46. A keyword designated by a user is shown in the keyword space 42. The keyword space 42 and the search button 44 are used to further narrow down the list of products shown in the list area 46.

A list of products correlated to the keyword designated by the user is shown in the list area 46. For example, the name and price of a product and a shop that sells the product are shown in the list area 46. In the list area 46, the product name makes a link button, and link information (URL) to a product page showing details on the product is correlated to the product name. That is, when the user clicks the product name, the product page appears on the display unit. The user can buy the product in the product page.

The product list page 40 further includes an advertisement area 50A for showing advertisements. An advertisement 52 of a shop or a product correlated to the keyword designated by the user is shown in the advertisement area 50A. The advertisement 52 includes an advertisement image 54 and an advertisement text 56 (for example, a shop name, a product name, or the like). The advertisement image 54 and the advertisement text 56 make link buttons, and link information (URL) to a shop page or a product page is correlated to the advertisement image 54 and the advertisement text 56. That is, when the advertisement image 54 or the advertisement text 56 is clicked, the shop page or the product page appears in the display unit. For example, a list of products dealt in the shop is shown in the shop page. The user can buy a product in the shop page.

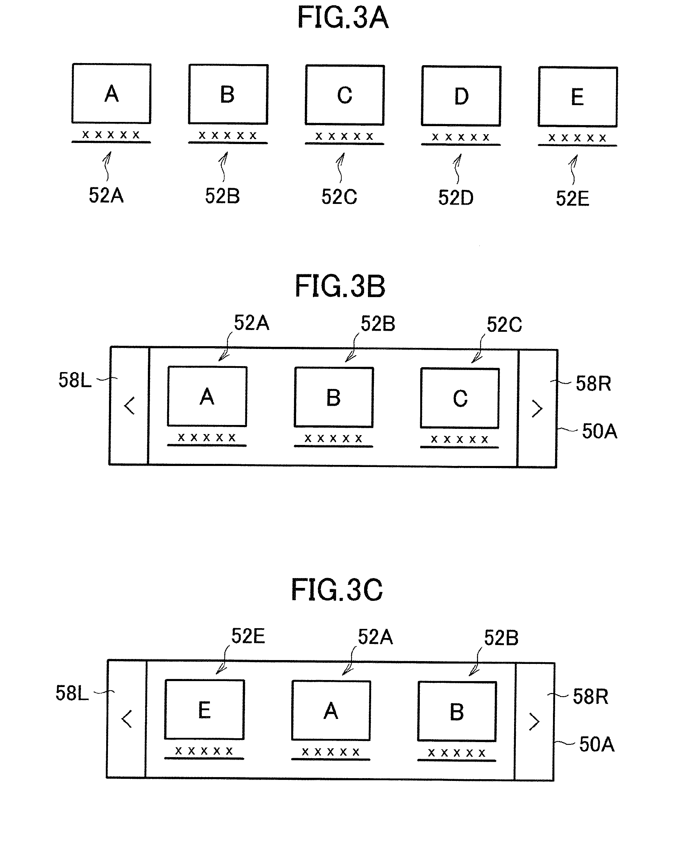

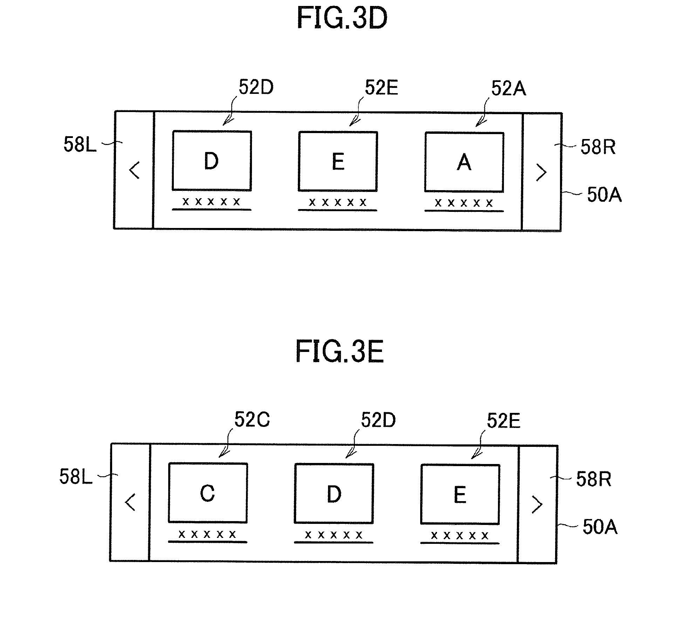

The advertisement area 50A scrolls. FIGs 3A to 3E explain scroll of the advertisement area 50A. In this embodiment, as shown in FIG. 3A, five advertisements 52A, 52B, 52C, 52D, 52E are virtually arranged, and three out of these five advertisements 52A to 52E are sequentially shown in the advertisement area 50A. For example, as shown in FIG. 3B, the advertisements 52A to 52C are initially shown in the advertisement area 50A. Then, after elapse of a predetermined period of time, the advertisements 52A to 52C move in the right direction in the advertisement area 50A. As a result, as shown in FIG. 3C, the advertisement 52C disappears from the advertisement area 50A, and the advertisement 52E is newly shown in the advertisement area 50A instead. Then, after elapse of another predetermined period of time, the advertisements 52E, 52A, 52B move in the right direction in the advertisement area 50A. As a result, as shown in FIG. 3D, the advertisement 52B disappears from the advertisement area 50A and the advertisement 52D is newly shown in the advertisement area 50A instead. Then, after elapse of still another predetermined period of time, the advertisements 52D, 52E, 52A move in the right direction in the advertisement area 50A. As a result, as shown in FIG. 3E, the advertisement 52A disappears from the advertisement area 50A, and the advertisement 52C is newly shown in the advertisement area 50A instead. With this operation repetitively executed, the advertisement area 50A scrolls in the right direction.

The advertisement area 50A includes a left button 58L and a right button 58R. The right button 58R is a button for scrolling the advertisement area 50A in the right direction. Meanwhile, the left button 58L is a button for scrolling the advertisement area 50A in the left direction. For example, when the left button 58L is clicked with the advertisements 52A to 52C shown in the advertisement area 50A, the advertisements 52A to 52C move in the left direction in the advertisement area 50A. As a result, the advertisement 52A disappears from the advertisement area 50A, and the advertisement 52D is newly shown in the advertisement area 50A instead.

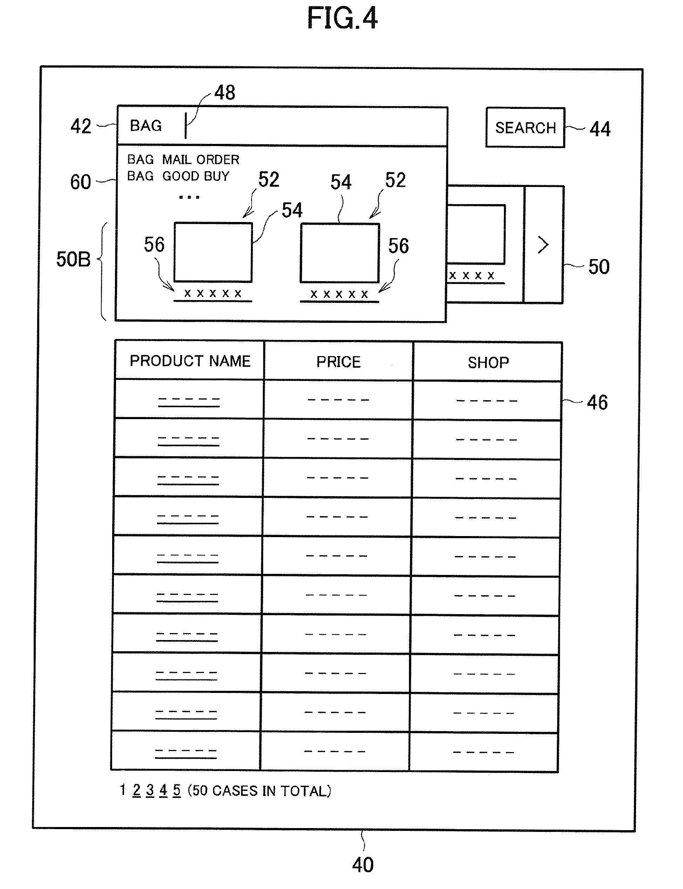

Note that an advertisement area set in the product list page 40 is not limited to the advertisement area 50A. FIG. 4 shows one example of a product list page 40 when a user tries to input an additional keyword into the keyword space 42 in order to further narrow down the list of products shown in the list area 46. Specifically, as shown in FIG. 4, when a user tries to input an additional keyword into the keyword space 42, a cursor 48 appears in the keyword space 42, and a suggestion area 60 for suggesting a recommended additional keyword to the user appears. In the example shown in FIG. 4, "mail order" and "good buy" are suggested as additional keywords. A user can readily input a desired additional keyword by selecting any of the additional keywords shown in the suggestion area 60.

The suggestion area 60 includes an advertisement area 50B. An advertisement 52 is shown together with a recommended additional keyword in the suggestion area 60. In this embodiment, two advertisements 52 are shown in the advertisement area 50B. Similar to the advertisement 52 shown in the advertisement area 50A, an advertisement 52 shown in the advertisement area 50B as well includes an advertisement image 54 and an advertisement text 56. Link information (URL) to a shop page or a product page is correlated to the advertisement image 54 and the advertisement text 56, so that the shop page or the product page is displayed on the display unit upon click on the advertisement image 54 or the advertisement text 56.

Note that an advertisement area is not limited to the advertisement areas 50A, 50B. For example, an advertisement area may be set on the left or right side of the list area 46. Alternatively, for example, an advertisement area may be set on the upper side of the keyword space 42. Note that each of the advertisement areas 50A, 50B will be hereinafter referred as an "advertisement area 50" when distinction is not necessary.

In the e-commerce system 1 according to the embodiment, advertisements with a higher bid price is selected as advertisements 52 to be shown in the advertisement area 50 from among a plurality of advertisements (hereinafter referred to as "a plurality of display candidate advertisements") that are candidates for advertisements 52 to be shown in the advertisement area 50.

As a method for selecting display candidate advertisements with a higher bid price as advertisements 52 to be shown in the advertisement area 50, there is available a method for sorting a plurality of display candidate advertisements by a bid price as a key, and sequentially selecting as advertisements 52 to be shown in the advertisement area 50, beginning with one with a higher bid price. In this case, processing of "determining which bid price of the two display candidate advertisements is higher, and rearranging the display candidate advertisements based on the result of determination" is repetitively executed in the processing for sorting the plurality of display candidate advertisements, whereby the plurality of display candidate advertisements are sorted to be arranged in an order of a higher bid price, for example. This, however, may result in a heavy processing load in the processing for selecting advertisements 52 to be shown in the advertisement area 50.

Below, a technique will be described for selecting display candidate advertisements with a higher bid price as advertisements 52 to be shown in the advertisement area 50 without executing processing for sorting display candidates by a bid price as a key.

Initially, data that is stored in the database 22 will be described. FIGs 5 and 6 show one example of data stored in the database 22. Note that although a user table indicating user information, a purchase history table indicating a purchase history of each user, and so forth are stored in the database 22 in addition to the data shown in FIGs 5 and 6, such tables are not described here.

FIG. 5 shows one example of a shop table. The shop table shown in FIG. 5 includes "shop ID", "name", "address", "telephone number", and "shop page" fields. Identification information (shop ID) for uniquely identifying a shop is registered in the "shop ID" field. The name, address, and telephone number of the shop are registered in the "name", "address", and "telephone number" fields, respectively. Link information (URL) to a web page (shop page) on the shop is registered in the "shop page" field.

FIG. 6 shows one example of a product table. The product table shown in FIG. 6 includes "product ID", "shop ID", "category", "name", "price", "stock", and "product page" fields. Identification information (product ID) for uniquely identifying a product is registered in the "product ID" field. The shop ID of a shop that sells the product is registered in the "shop ID" field. A category, name, price, and stock of the product are registered in the "category", "name", "price", and "stock" fields, respectively. Link information (URL) to a web page (product page) on the product is registered in the "product page" field.

Below, data that is stored in the database 12 will be described. FIGs 7 to 10 show one example of data stored in the database 12.

FIG. 7 shows one example of an advertisement table. The advertisement table shown in FIG. 7 includes "advertisement ID", "advertiser ID", "keyword", "bid price", and "advertisement data" fields. Identification information (advertisement ID) for uniquely identifying an advertisement is registered in the "advertisement ID" field. A shop ID of a shop (advertiser) wishing to make advertisement is registered in the "advertiser ID" field.

A keyword designated by the shop (advertiser) as a keyword to be correlated to their advertisement is registered in the "keyword" field. A bid price presented by the shop (advertiser) is registered in the "bid price" field.

Advertisement data necessary to display an advertisement on the display unit of the user terminal 32 is registered in the "advertisement data" field. For example, the advertisement data includes information indicating the advertisement image 54, information describing the advertisement text 56, and link information (for example, link information to the shop page or the product page) to be correlated to the advertisement image 54 and the advertisement text 56.

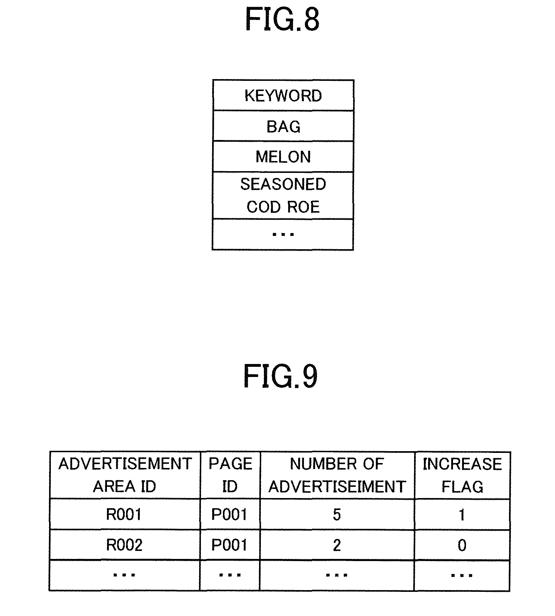

FIG. 8 shows one example of a keyword table. A keyword that is selectable for a shop (advertiser) as a keyword to be correlated to an advertisement is registered in the keyword table. For example, a keyword designated in advance by the provider of the advertisement service or the like is registered in the keyword table.

Alternatively, a keyword designated by a shop (advertiser) may be registered in the keyword table. In this case, a keyword designated by a shop is added to the keyword table in the manner described below. That is, a person in charge of a shop inputs a keyword wished to be registered in the keyword table in a dedicated screen that is shown in the shop terminal 30 upon access to the advertisement server 10. The keyword input by the person in charge of the shop is checked in the e-commerce system 1 (the provider of the advertisement service, or the like), and added to the keyword table for registration if no particular problem or the like is found.

FIG. 9 shows one example of an advertisement area table. The advertisement area table is a table relevant to the advertisement area 50 set in each web page (content). The advertisement area table shown in FIG. 9 includes "advertisement area ID", "page ID", "number of advertisements", and "increase flag" fields.

Identification information (advertisement area ID) for uniquely identifying an advertisement area 50 is registered in the "advertisement area ID" field. Identification information (page ID) for a web page where the advertisement area 50 is set is registered in the "page ID" field. The number (basic number) of advertisements 52 that can be shown in the advertisement area 50 is registered in the "number of advertisements" field. Flag information indicating whether or not the advertisement area 50 is adapted to increase the number of advertisements 52 displayable therein is registered in the "increase flag" field. Specifically, either the value "0" or "1" is registered in the "increase flag" field. The value "0" indicates that it is not possible to increase the number of displayable advertisements 52 (that is, the number of advertisements 52 is fixed); the value "1" indicates that it is possible to increase the number of displayable advertisements 52.

For example, an advertisement area 50 with advertisement area ID "R001" corresponds to an advertisement area 50A set in the product list page 40. As the advertisement area 50A scrolls to show a plurality of advertisements 52, as described above, it is possible to show six or more advertisements 52 in the advertisement area 50A, and therefore the increase flag is set to "1". Meanwhile, an advertisement area 50 with the advertisement area ID "R002" corresponds to an advertisement area 50B set in the product list page 40. The increase flag of the advertisement area 50B is set to "0", and the number of advertisements 52 shown in the advertisement area 50B is limited to two.

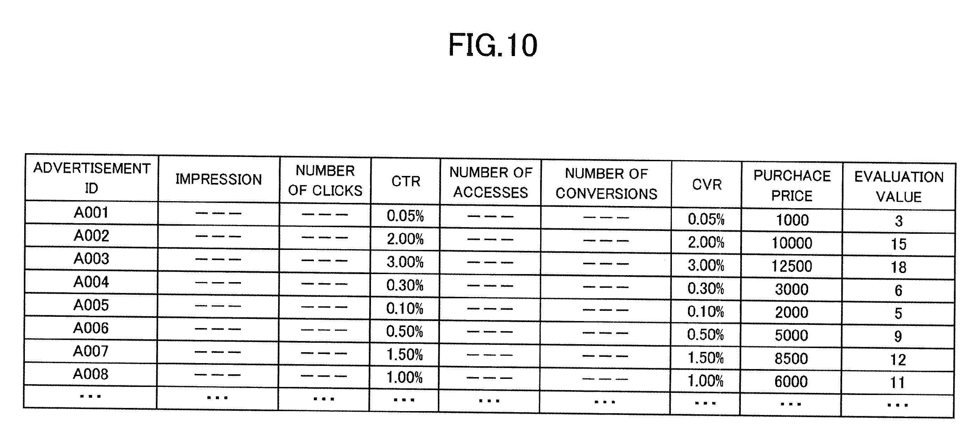

FIG. 10 shows one example of an index value table. An index value table is a table relevant to various index values indicating advertisement effect. The index value table includes "advertisement ID", "impression", "number of clicks", "CTR", "number of accesses", "number of conversions", "CVR", "purchase price", and "evaluation value" fields. The "advertisement ID" field is similar to the "advertisement ID" field in the advertisement table.

The number of times at which an advertisement is displayed on the display unit of each of the user terminals 32 (in other words, the number of times at which an advertisement is distributed to each of the user terminals 32) is registered in the "impression" field. The number of times at which the advertisement is clicked is registered in the "number of clicks" field. That is, the value in the "impression" field is incremented every time when the advertisement is displayed on the display unit of the user terminal 32 (every time when the advertisement is distributed to the user terminal 32). Further, every time when an advertisement displayed on the display unit of the user terminal 32 is clicked, that fact is notified to the advertisement server 10, and the value in the "number of clicks" field is incremented.

A "click through rate" (CTR: Click Through Rate), or an index value indicating advertisement effect, is registered in the "CTR" field. The click through rate is calculated by dividing the number of clicks by the impression. A higher value of the click through rate indicates higher advertisement effect.

The number of accesses (page view) to a web page including an advertisement area is registered in the "number of accesses" field. The number of cases in which a final outcome desired by an advertiser is reached (for example, purchase of a product, a request for information, or the like) is registered in the "number of conversions" field. That is, every time when a web page including an advertisement area is accessed, that fact is notified to the advertisement server 10, and the value in the "number of accesses" field is incremented. Further, every time a final outcome desired by an advertiser is reached (for example, purchase of product, a request for information request, or the like), that fact is notified to the advertisement server 10, and the value in the "number of conversions" field is incremented.

A "conversion rate" (CVR: ConVersion Rate), or an index value indicating advertisement effect, is registered in the "CVR" field. The conversion rate is calculated by dividing the number of conversions by the number of accesses. A higher value of the conversion rate indicates higher advertisement effect. Note that the "number of unique users" may be used instead of the "number of accesses". The "number of unique users" is obtained by counting the number of persons having accessed a web page including the advertisement area so as to exclude duplication.

The total price of products having actually bought by users having clicked the advertisement at a shop that is the advertiser is registered in the "purchase price" field. The value registered in the "purchase price" field as well is an index value indicating advertisement effect. A higher value in the "purchase price" field indicates higher advertisement effect.

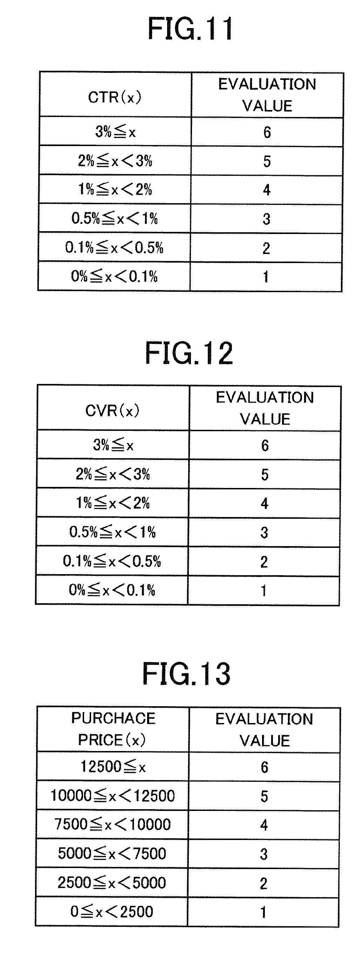

A value (evaluation value) obtained through comprehensive evaluation on a plurality of index values indicating advertisement effect is registered in the "evaluation value" field. In this embodiment, a value that is calculated based on the values in the "CTR" field, the "CVR" field, and the "purchase price" field, and the information shown in FIGs 11, 12, 13 is registered in the "evaluation value" field.

FIG. 11 shows one example of information indicating a correspondence relation between the click through rate (CTR) and the evaluation value. The information shown in FIG. 11 is defined such that a higher click through rate (that is, higher advertisement effect) results in a higher evaluation value. Note that the information indicating the correspondence relation between the click through rate and the evaluation value is not limited to information in the form of a table but may be information in the form of a numerical expression, for example.

Similarly, FIG. 12 shows one example of information indicating a correspondence relation between the conversion rate (CVR) and the evaluation value. The information shown in FIG. 12 is defined such that a higher conversion rate (that is, higher advertisement effect) results in a higher evaluation value. Note that the information indicating the correspondence relation between the conversion rate and the evaluation value as well is not limited to information in the form of a table but may be information in the form of a numerical expression.

Similarly, FIG. 13 shows one example of a correspondence relation between the purchase price and the evaluation value. The information shown in FIG. 13 is defined such that a higher purchase price (that is, higher advertisement effect) results in a higher evaluation value. Note that the information indicating the correspondence relation between the purchase price and the evaluation value also is not limited to information in the form of a table but may be information in the form of a numerical expression.

In this embodiment, an evaluation value (E1) correlated to the value in the "CTR" field is obtained based on the information shown in FIG. 11. An evaluation value (E2) correlated to the value in the "CVR" field is obtained based on the information shown in FIG. 12. An evaluation value (E3) correlated to the value in the "purchase price" field is obtained based on the information shown in FIG. 13. Then, the total value (E1+E2+E3) of these evaluation values is registered in the "evaluation value" field. A higher value in the "evaluation value" field indicates higher advertisement effect.

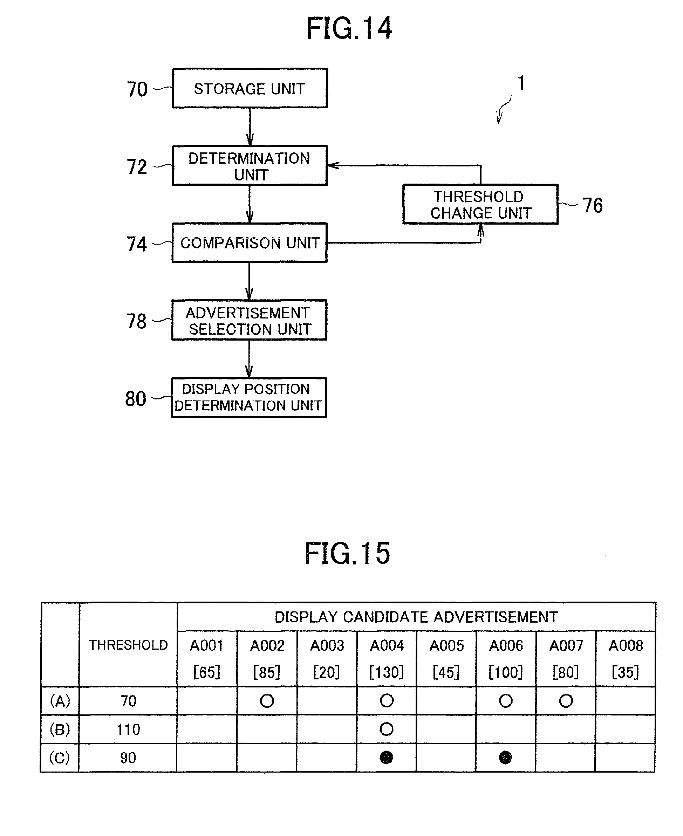

Below, function blocks implemented in the e-commerce system 1 will be described. FIG. 14 is a functional block diagram showing function blocks relevant to the present invention among those implemented in the e-commerce system 1. As shown in FIG. 14, the e-commerce system 1 includes a storage unit 70, a determination unit 72, a comparison unit 74, a threshold change unit 76, an advertisement selection unit 78, and a display position determination unit 80.

For example, the storage unit 70 and the determination unit 72 are implemented using the database 12. The comparison unit 74, the threshold change unit 76, the advertisement selection unit 78, and the display position determination unit 80 are implemented using the advertisement server 10. That is, the control unit of the advertisement server 10 executes processing according to a program to thereby function as the comparison unit 74, the threshold change unit 76, the advertisement selection unit 78, and the display position determination unit 80.

Various data relevant to an advertisement is stored in the storage unit 70. For example, a bid price presented by an advertiser is stored in the storage unit 70 (bid price storage means) so as to be correlated to each of a plurality of advertisements. For example, an advertisement table, such as is shown in FIG. 7, is stored in the storage unit 70 (bid price storage means).

For example, index value information concerning an advertisement effect index value is stored in the storage unit 70 so as to be correlated to each of a plurality of advertisements. The "advertisement effect index value" refers to, for example, at least one of the click through rate, the conversion rate, and the total price of a product actually bought via the advertisement shown in the advertisement area in the content. The "index value information" is a value obtained based on a plurality of advertisement effect index values, for example. Alternatively, the "index value information" may be the advertisement effect index value itself, for example. Still alternatively, the "index value information" may be information necessary to calculate the advertisement effect index value, for example.

The index value table, such as is shown in FIG. 10, for example, is stored in the storage unit 70 (index value information storage means). In this case, the value in the "evaluation value" field corresponds to the above described "value obtained based on the plurality of advertisement effect index values". The value in the "CTR", "CVR", or "purchase price" field corresponds to the above described "advertisement effect index value itself". The respective values in the "impression", "number of clicks", "number of accesses", and "number of conversions" fields correspond to the above described "information necessary to calculate the advertisement effect index value".

The determination unit 72 determines whether or not the bid price of each of a plurality of display candidate advertisements (candidates for the advertisements to be shown in an advertisement area in content) are higher than a threshold.

For example, in this embodiment, the product list page 40 corresponds to the above described "content", and the advertisement area 50 (each of the advertisement areas 50A, 50B) in the product list page 40 corresponds to the above described "advertisement area". A plurality of advertisements correlated to a keyword designated by a user to search for a product correspond to the above described "a plurality of display candidate advertisements". For example, when a user designates the word "bag" as the keyword to search for a product, a plurality of advertisements correlated to the word "bag" correspond to the above described "a plurality of display candidate advertisements".

The comparison unit 74 compares the number of advertisements 52 to be shown in the advertisement area 50 and the number of display candidate advertisements with a bid price higher than a threshold.

The threshold change unit 76 changes the threshold, based on the result of comparison by the comparison unit 74. For example, when the number of advertisements 52 to be shown in the advertisement area 50 is not equal to the number of display candidate advertisements with a bid price higher than the threshold, the threshold change unit 76 changes the threshold.

For example, when the number of display candidate advertisements with a bid price higher than the threshold is larger than the number of advertisements 52 to be shown in the advertisement area 50, the threshold change unit 76 sets a value higher than the current threshold as a new threshold. Meanwhile, for example, when the number of display candidate advertisements with a bid price higher than the threshold is smaller than the number of advertisements 52 to be shown in the advertisement area 50, the threshold change unit 76 sets a value lower than the current threshold as a new threshold.

When the threshold is changed by the threshold change unit 76, the determination unit 72 determines whether or not the bid price of the display candidate advertisement is higher than the threshold changed by the threshold change unit 76. Further, when the threshold is changed by the threshold change unit 76, the comparison unit 74 compares the number of advertisements 52 to be shown in the advertisement area 50 and the number of display candidate advertisements with a bid price higher than the threshold changed by the threshold change unit 76.

The advertisement selection unit 78 selects advertisements 52 to be shown in the advertisement area 50 from among a plurality of display candidate advertisements. Specifically, the advertisement selection unit 78 selects display candidate advertisements with a bid price higher than the threshold as the advertisements 52 to be shown in the advertisement area 50, based on the result of determination by the determination unit 72.

For example, the advertisement selection unit 78 selects display candidate advertisements with a bid price higher than the threshold as the advertisements 52 to be shown in the advertisement area 50, based on the result of comparison by the comparison unit 74. Note that when the threshold is changed by the threshold change unit 76, the advertisement selection unit 78 selects display candidate advertisements with a bid price higher than the threshold changed by the threshold change unit 76 as the advertisements 52 to be shown in the advertisement area 50, based on the result of comparison by the comparison unit 74 after the threshold is changed by the threshold change unit 76.

For example, when the number of the advertisements 52 to be shown in the advertisement area 50 is equal to the number of display candidate advertisements with a bid price higher than the threshold, the advertisement selection unit 78 selects the display candidate advertisements with a bid price higher than the threshold as the advertisements 52 to be shown in the advertisement area 50.

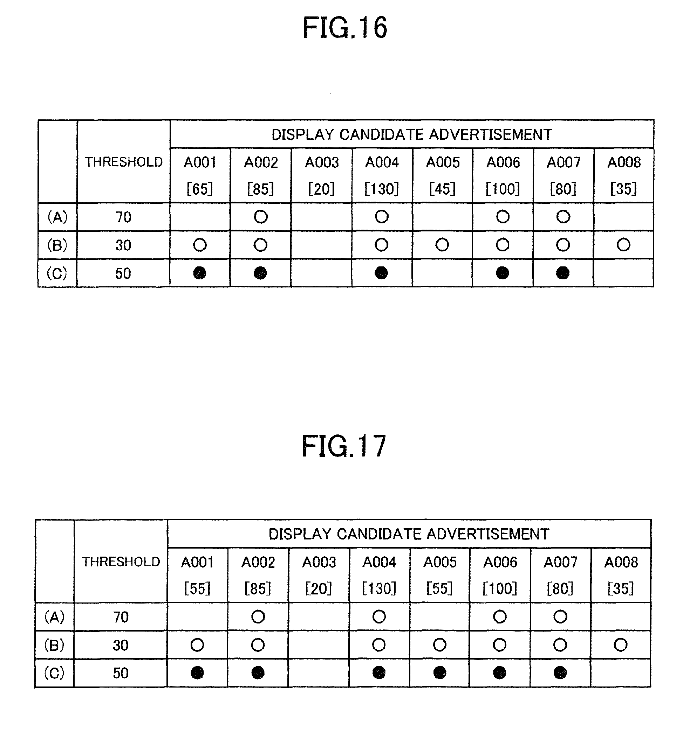

Below, a process of advertisement selection executed by the determination unit 72, the comparison unit 74, the threshold change unit 76, and the advertisement selection unit 78 will be described. FIGs 15 and 16 explain one example of a process of advertisement selection.

FIG. 15 explains one example of a process for selecting advertisements 52 to be shown in the advertisement area 50B. Meanwhile, FIG. 16 explains one example of a process for selecting advertisements 52 to be shown in the advertisement area 50A. In FIGs 15 and 16, a case is assumed in which a user designates the word "bag" as the keyword. Further, a case is assumed in which advertisements with advertisement ID's "A001" to "A008" are the display candidate advertisements. The number in brackets below each advertisement ID in the "display candidate advertisement" space in FIGs 15 and 16 indicates a bid price. A circle indicates a display candidate advertisement with a bid price higher than the threshold, and a black circle, in particular, indicates a display candidate advertisement selected as an advertisement 52 to be shown in the advertisement area 50A or the advertisement area 50B. This is similarly applicable to FIGs 17, 22, 23, and 26 to be described later.

Initially, one example of the process for selecting advertisements 52 to be shown in the advertisement area 50B will be described with reference to FIG. 15. In this case, the initial value of the threshold is initially set.

For example, the initial value of the threshold is determined based on the bid prices of display candidate advertisements. For example, the initial value of the threshold is determined based on a statistical value of the bid prices of display candidate advertisements. For example, the initial value of the threshold is determined based on the average of the bid prices of display candidate advertisements. Alternatively, for example, the initial value of the threshold is determined based on the minimum or maximum value of the bid prices of display candidate advertisements. Still alternatively, for example, the initial value of the threshold is determined based on the middle value between the maximum value and the minimum value of the bid prices of display candidate advertisements. Yet alternatively, for example, the initial value of the threshold may be determined based on a standard deviation of the bid prices of display candidate advertisements.

The initial value of the threshold may be determined based on the bid prices of all advertisements. For example, the initial value of the threshold may be determined based on a statistical value (for example, an average) of the bid prices of all advertisements.

Alternatively, the initial value of the threshold may be set to a predetermined value. For example, the initial value of the threshold may be set to "0". Still alternatively, for example, the highest bid price in the past may be set as the initial value of the threshold.

Below, a case will be described in which the average of the bid prices of display candidate advertisements is set as the initial value of the threshold. In this case, the threshold is set to "70" (see (A) in FIG. 15). In this case, the determination unit 72 determines whether or not the bid price of each of the display candidate advertisements is higher than the threshold (70). As shown by (A) in FIG. 15, the number of display candidate advertisements with a bid price higher than the threshold (70) is four. The comparison unit 74 compares the number (4) of the display candidate advertisements with a bid price higher than the threshold (70) and the number (2) of the advertisements 52 to be shown in the advertisement area 50B.

In this case, as the number (4) of the display candidate advertisements with a bid price higher than the threshold (70) is larger than the number (2) of the advertisements 52 to be shown in the advertisement area 50B, the threshold change unit 76 sets a value higher than the current threshold (70) as a new threshold in order to narrow down the display candidate advertisements. For example, the threshold change unit 76 sets a value (110) obtained by adding a correction value (40) to the current threshold (70) as a new threshold (see (B) in Fig. 15). Note that although the correction value is assumed as "40" here in the description, the correction value may be a value other than "40".

In this case, the determination unit 72 determines whether or not the bid price of each of display candidate advertisements is higher than the threshold (110). As shown by (B) in FIG. 15, the number of display candidate advertisements with a bid price higher than the threshold (110) is one. The comparison unit 74 compares the number (1) of the display candidate advertisements with a bid price higher than the threshold (110) and the number (2) of the advertisements 52 to be shown in the advertisement area 50B.

In this case, as the number (1) of the display candidate advertisement with a bid price higher than the threshold (110) is smaller than the number (2) of the advertisements 52 to be shown in the advertisement area 50B, the threshold change unit 76 sets a value lower than the current threshold (110) as a new threshold in order to modify the narrowing down of the display candidate advertisements. However, if a value (70) obtained by subtracting the above described correction value (40) from the threshold (110) is set as a new threshold, it would be resulted that the previous threshold is again set, which is meaningless. Therefore, the threshold change unit 76 needs to set a value lower than the current threshold (110) and higher than the previous threshold (70) as a new threshold.

For example, the threshold change unit 76 sets a value (20) obtained by multiplying the above described correction value (40) by a coefficient k (0<k<1: for example, 0.5) as a correction value, and sets a value (90) obtained by subtracting this correction value (20) from the current threshold (110) as a new threshold (see (C) in FIG. 15).

In this case, the determination unit 72 determines whether or not the bid price of each of display candidate advertisements is higher than the threshold (90). As shown by (c) in FIG. 15, as the number of display candidate advertisements with a bid price higher than the threshold (90) is two, the comparison unit 74 compares the number (2) of the display candidate advertisements with a bid price higher than the threshold (90) and the number (2) of the advertisements 52 to be shown in the advertisement area 50B.

In this case, as the number (2) of the display candidate advertisements with a bid price higher than the threshold (90) is equal to the number (2) of the advertisements 52 to be shown in the advertisement area 50B, the advertisement selection unit 78 selects the two display candidate advertisements with a bid price higher than the threshold (90) as the advertisements 52 to be shown in the advertisement area 50B (see (C) in FIG. 15). That is, the display candidate advertisements (A004, A006) with the first and second highest bid prices are selected as the advertisements 52 to be shown in the advertisement area 50B. That is, display candidate advertisements with a higher bid price is selected as the advertisements 52 to be shown in the advertisement area 50B.

Note that in the above described process of advertisement selection, processing for sorting display candidate advertisements by a bid price as a key is not executed. The above described advertisement selection is achieved in processing with a relatively light processing load, such as processing of "comparing a bid price of each display candidate advertisement with a threshold, then calculating the number of display candidate advertisements with a bid price higher than the threshold, and comparing the number with the number of advertisements 52 to be shown in the advertisement area 50".

Below, one example of a process for selecting advertisements 52 to be shown in the advertisement area 50A will be described with reference to FIG. 16. Similar to the case of selection of the advertisements 52 to be shown in the advertisement area 50B, the initial value of the threshold is initially set in this case as well.

In a case where the average of the bid prices of display candidate advertisements is set as the initial value of the threshold, the threshold is set to "70" (see (A) in FIG. 16). In this case, the determination unit 72 determines whether or not the bid price of each of the display candidate advertisements is higher than the threshold (70). As shown by (A) in FIG. 16, as the number of display candidate advertisements with a bid price higher than the threshold (70) is four, the comparison unit 74 compares the number (4) of the display candidate advertisements with a bid price higher than the threshold (70) and the number (5) of the advertisements 52 to be shown in the advertisement area 50B.

In this case, as the number (4) of the display candidate advertisements with a bid price higher than the threshold (70) is smaller than the number (5) of the advertisements 52 to be shown in the advertisement area 50B, the threshold change unit 76 sets a value lower than the current threshold (70) as a new threshold in order to modify the narrowing down of the display candidate advertisements. For example, the threshold change unit 76 sets a value obtained by subtracting a correction value (40) from the threshold (70) as a new threshold (see (B) in FIG. 16). Note that although the description here as well is based on an assumption that the correction value is "40", the correction value may be a value other than "40".

In this case, the determination unit 72 determines whether or not the bid price of each of display candidate advertisements is higher than the threshold (30). As shown by (B) in FIG. 16, as the number of display candidate advertisements with a bid price higher than the threshold (30) is seven, the comparison unit 74 compares the number (7) of the display candidate advertisements with a bid price higher than the threshold (30) and the number (5) of the advertisements 52 to be shown in the advertisement area 50A.

In this case, as the number (7) of the display candidate advertisements with a bid price higher than the threshold (30) is larger than the number (5) of the advertisements 52 to be shown in the advertisement area 50A, the threshold change unit 76 sets a value higher than the current threshold (30) as a new threshold in order to narrow down the display candidate advertisements. However, if a value (70) obtained by adding the above described correction value (40) to the threshold (30) is set as a new threshold, it would be resulted that the previous threshold is again set, which is meaningless. Therefore, the threshold change unit 76 needs to set a value higher than the current threshold (30) and lower than the previous threshold (70) as a new threshold.

For example, the threshold change unit 76 sets a value (20) obtained by multiplying the above described correction value (40) by a coefficient k (0<k<1: for example, 0.5) as a correction value, and sets a value (50) obtained by adding this correction value (20) to the current threshold (30) as a new threshold (see (C) in FIG. 16).

In this case, the determination unit 72 determines whether or not the bid price of each of display candidate advertisements is higher than the threshold (50). As shown in by (C) in FIG. 16, as the number of the display candidate advertisements with a bid price higher than the threshold (50) is five, the comparison unit 74 compares the number (5) of the display candidate advertisements with a bid price higher than the threshold (50) and the number (5) of the advertisements 52 to be shown in the advertisement area 50A.

In this case, as the number (5) of the display candidate advertisements with a bid price higher than the threshold (50) is equal to the number (5) of the advertisements 52 to be shown in the advertisement area 50A, the advertisement selection unit 78 selects the five display candidate advertisements with a bid price higher than the threshold (50) as the advertisements 52 to be shown in the advertisement area 50A (see (C) in FIG. 16). That is, the display candidate advertisements (A001, A002, A004, A006, A007) with the first to fifth highest bid prices are selected as advertisements 52 to be shown in the advertisement area 50B. That is, display candidate advertisements with a higher bid price is selected as the advertisements 52 to be shown in the advertisement area 50B.

Note that in the above described process of advertisement selection, processing for sorting display candidate advertisements by a bid price as a key is not executed. The above described advertisement selection is achieved in processing with a relatively light processing load, such as processing of "comparing a bid price of each display candidate advertisement with a threshold, then calculating the number of display candidate advertisements with a bid price higher than the threshold, and comparing the number with the number of advertisements 52 to be shown in the advertisement area 50".

Assume here a case in which the bid prices of advertisements with advertisement ID's "A001" and "A005" are all "55". FIG. 17 explains one example of a process for selecting advertisements 52 to be shown in the advertisement area 50A in the above described situation.

In this case, similar to the case shown in FIG. 16, the initial value of the threshold is set to "70" (see (A) in FIG. 17), and thereafter, the threshold is updated to "30" (see (B) in FIG. 17). Then, the threshold is further updated to "50" (see (C) in FIG. 17).

When the threshold is updated to "50", the determination unit 72 determines whether or not the bid price of each of display candidate advertisements is higher than the threshold (50). As shown by (C) in FIG. 17, the number of display candidate advertisements with a bid price higher than the threshold (50) is six, which is larger than the number (5) of advertisements 52 to be shown in the advertisement area 50A.

In this case, there are two display candidate advertisements, namely display candidate advertisements with advertisement ID "A001" and "A005", of which bid prices are lowest among the display candidate advertisements with a bid price higher than the threshold (50). Further, as the bid prices of the display candidate advertisements with advertisement ID's "A001" and "A005" are "55" in this case, it is necessary to set the threshold to a value equal to or larger than "55" in order to narrow down the display candidate advertisements. However, if the threshold is set to a value equal to or larger than "55", the number of display candidate advertisements with a bid price higher than the threshold (for example, 55) will be reduced to four, which is smaller than the number (5) of advertisements 52 to be shown in the advertisement area 50A. That is, in this case, there is no threshold that makes the number of display candidate advertisements with a bid price higher than the threshold equal to the number of advertisements 52 to be shown in the advertisement area 50A. That is, in this case, the number of display candidate advertisements with a bid price higher than the threshold cannot become equal to the number (5) of advertisements 52 to be shown in the advertisement area 50A.

In such a case, in the e-commerce system 1, if it is possible to increase the number of advertisements 52 to be shown in the advertisement area 50A, the number of advertisements 52 to be shown in the advertisement area 50A is increased. As the advertisement area 50A is adapted to increase of the number of displayable advertisement 52, as described above, the number of advertisements 52 to be shown in the advertisement area 50A is increased to the number (6) of the display candidate advertisements with a bid price higher than the threshold (50) in the above described case. Then, the advertisement selection unit 78 selects the six advertisements (A001, A002, A004, A005, A006, A007) with a bid price higher than the threshold (50) as the advertisements 52 to be shown in the advertisement area 50A.

Meanwhile, if the advertisement area 50A is not adapted to increase of the number of displayable advertisements 52, the advertisement selection unit 78 selects five advertisements 52 to be shown in the advertisement area 50A from among the six display candidate advertisements with a bid price higher than the threshold (50).

For example, based on the index value information of the six display candidate advertisements with a bid price higher than the threshold (50), the advertisement selection unit 78 selects five advertisements 52 to be shown in the advertisement area 50A from among the six display candidate advertisements. In this case, the value in the "evaluation value" field in the index value table is used, for example, as the "index value information".

Specifically, the advertisement selection unit 78 initially confirms the four display candidate advertisements (A002, A004, A006, A007) other than the display candidate advertisements (A001, A005) with the lowest bid price among the six display candidate advertisements (A001, A002, A004, A005, A006, A007) with a bid price higher than the threshold (50), as advertisements 52 to be shown in the advertisement area 50A. In this case, as the number of advertisements 52 to be shown in the advertisement area 50A is "5", and the number of display candidate advertisements confirmed as advertisements 52 to be shown in the advertisement area 50A is "4", it is possible to select another one display candidate advertisement as an advertisement 52 to be shown in the advertisement area 50A. Therefore, based on the evaluation values of the remaining display candidate advertisements (A001, A005) among the six display candidate advertisements with a bid price higher than the threshold (50), the advertisement selection unit 78 selects one advertisement 52 from among the remaining display candidate advertisements, as the last one advertisement 52 to be shown in the advertisement area 50A. For example, the advertisement selection unit 78 selects a display candidate advertisement with the highest evaluation value among the above described remaining display candidate advertisements (A001, A005), as the last one advertisement 52 to be shown in the advertisement area 50A.

Note that the advertisement selection unit 78 may select five display candidate advertisements as advertisements 52 to be shown in the advertisement area 50A, beginning with one with the highest evaluation value, from among the six display candidate advertisements with a bid price higher than the threshold (50).

Alternatively, the advertisement selection unit 78 may use the advertisement effect index value itself instead of the value in the "evaluation value" field. That is, for example, at least one of the values in the "CTR" field, the "CVR" field, and the "purchase price" field may be used.

Alternatively, the advertisement selection unit 78 may select five advertisements 52 to be shown in the advertisement area 50A at random from among the six display candidate advertisements with a bid price higher than the threshold (50).

Below, the display position determination unit 80 will be described. When the advertisement selection unit 78 selects a plurality of advertisements as advertisements 52 to be shown in the advertisement area 50, the display position determination unit 80 determines a display position in the advertisement area 50 of each of the plurality of advertisements selected by the advertisement selection unit 78.

For example, in this embodiment, the display position determination unit 80 determines an order for arranging the five advertisements selected as advertisements 52 to be shown in the advertisement area 50A (see FIG. 3A). Further, for example, the display position determination unit 80 determines one of the two advertisements selected as advertisements 52 to be shown in the advertisement area 50B as an advertisement 52 to be shown on the left side in the advertisement area 50B and the other as an advertisement 52 to be shown on the right side in the advertisement area 50B.

For example, the display position determination unit 80 determines a display position of each of the plurality of advertisements selected by the advertisement selection unit 78, based on the index value information of each of the plurality of advertisements. For example, the display position determination unit 80 determines a display position of each of the plurality of advertisements selected by the advertisement selection unit 78 such that an advertisement with higher advertisement effect is shown at a position more likely to be seen by a user.

In this case, the value in the "evaluation value" field in the index value table, for example, is used as the "index value information". That is, the display position determination unit 80 determines an order for arranging the five advertisements selected as advertisements 52 to be shown in the advertisement area 50A (see FIG. 3A), based on the evaluation value of each of the five advertisements. In this case, other advertisement effect index values may be used instead of the value in the "evaluation value" field. That is, for example, at least one of the values in the "CTR" field, the "CVR" field, and the "purchase price" field in the index value table may be used.

For example, in FIGs 3A to 3E, the advertisement 52A is one of the advertisements 52A, 52B, 52C that are shown in the advertisement area 50A from the beginning, and is the one remaining shown for the longest period of time among the advertisements 52A, 52B, 52C. Therefore, the advertisement 52A can be rephrased as one that is most likely seen by a user among the advertisements 52A to 52E. Therefore, the display position determination unit 80 allocates an advertisement with the highest evaluation value among the five advertisements selected by the advertisement selection unit 78 to a position corresponding to the advertisement 52A shown in FIG. 3A. Similarly, the display position determination unit 80 allocates an advertisement with the second highest evaluation value to a position corresponding to the advertisement 52B shown in FIG. 3A, and one with the third highest evaluation value to a position corresponding to the advertisement 52C shown in FIG. 3A.

Further, in FIGs 3A to 3E, as the advertisement 52E is shown in the advertisement area 50A prior to the advertisement 52D, the display position determination unit 80 allocates an advertisement with the fourth highest evaluation value to a position corresponding to the advertisement 52E shown in FIG. 3A, and one with the lowest evaluation value to a position corresponding to the advertisement 52D shown in FIG. 3A.

Similarly, for example, the display position determination unit 80 determines an advertisement with a higher evaluation value of the two advertisements selected as advertisements 52 to be shown in the advertisement area 50B as one to be shown on the left side in the advertisement area 50B and the other with a lower evaluation value as one to be shown on the right side in the advertisement area 50B.

Note here that five advertisements are sorted by an evaluation value as a key. This sorting processing is executed with respect to the advertisements having already been narrowed down to a relatively small number, namely, five, and therefore, a processing load for the sorting processing is small. Accordingly, no particular problem is expected to be caused in terms of a processing load when the sorting processing is executed.

Alternatively, the display position determination unit 80 may determine a display position of each of the plurality of advertisements selected by the advertisement selection unit 78 at random. That is, the display position determination unit 80 may determine an order for arranging the five advertisements selected as advertisements 52 to be shown in the advertisement area 50A at random. Further, the display position determination unit 80 may determine at random one of the two advertisements selected as advertisements 52 to be shown in the advertisement area 50B as an advertisement 52 to be shown on the left side in the advertisement area 50B and the other as one to be shown on the right side in the advertisement area 50B.

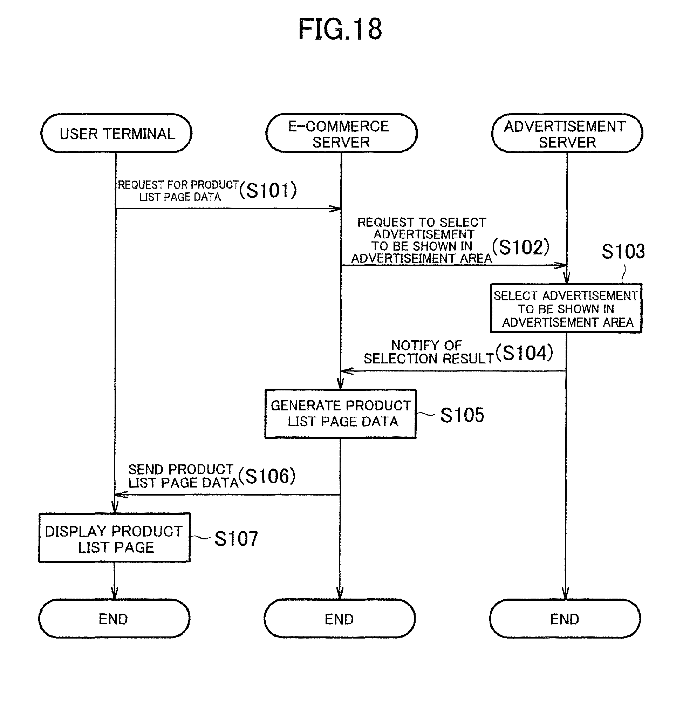

Below, processing that is executed in the e-commerce system 1 will be described. FIG. 18 explains one example of processing executed in the e-commerce system 1. The processing shown in FIG. 18 is executed when a user designates one or more keywords and clicks the search button in the product search page (or when a user designates one or more keywords and clicks the search button 44 in the product list page 40). Note that the control unit of the advertisement server 10 executes the processing at step S103 shown in FIG. 18 according to a program, to thereby function as the comparison unit 74, the threshold change unit 76, the advertisement selection unit 78, and the display position determination unit 80.

When a user designates one or more keywords and clicks the search button in the product search page (or when a user designates one or more keywords and clicks the search button 44 in the product list page 40), as shown in FIG. 18, the control unit of the user terminal 32 requests the e-commerce server 20 for product list page data (S101). That is, the control unit sends an HTTP request indicating a request for product list page data to the e-commerce server 20. The one or more keywords designated by the user is correlated to the HTTP request as a search condition, and the search condition (the one or more keywords) is sent to the e-commerce server 20.

The control unit of the e-commerce server 20 receives the HTTP request and the search condition (the one or more keywords) sent from the user terminal 32. Then, the control unit sends request information to request selection of advertisements 52 to be shown in the advertisement areas 50A, 50B in the product list page 40 to the advertisement server 10 (S102). This request information includes, for example, at least one of the page ID of the product list page 40 and the advertisement area ID's of the advertisement areas 50A, 50B and the one or more keywords designated by the user.

The control unit of the advertisement server 10 receives the above described request information, and then selects advertisements 52 to be shown in the advertisement areas 50A, 50B (S103). For example, the control unit initially selects five advertisements 52 to be shown in the advertisement area 50A and then selects two advertisements 52 to be shown in the advertisement area 50B.

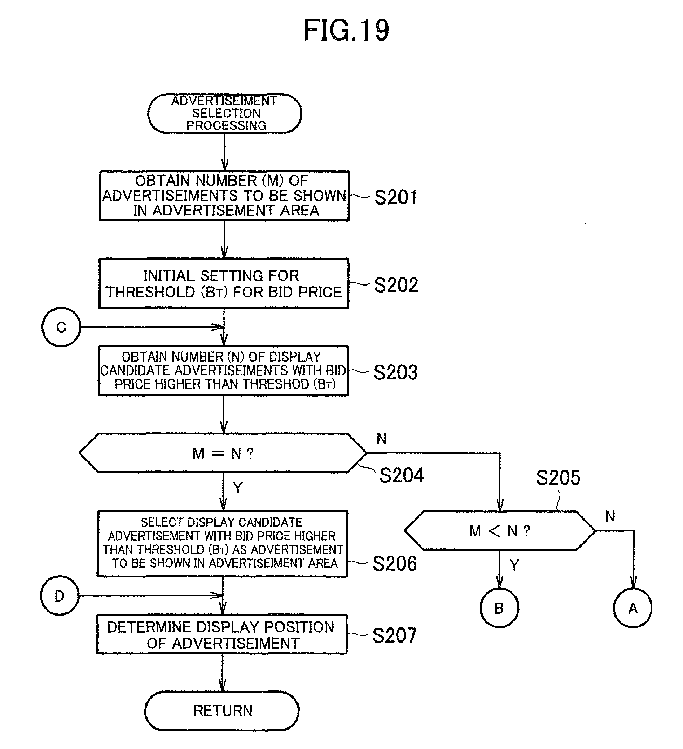

FIGs 19, 20, and 21 are flowcharts showing one example of advertisement selection processing executed at step S103. For example, the advertisement selection processing shown in FIGs 19 to 21 is executed for every advertisement area 50. That is, for example, the advertisement selection processing shown in FIGs 19 to 21 is executed initially to select advertisements 52 to be shown in the advertisement area 50A, and the advertisement selection processing shown in FIGs 19 to 21 is executed thereafter to select advertisements 52 to be shown in the advertisement area 50B.

As shown in FIG. 19, the control unit initially obtains the number (M) of advertisements 52 to be shown in the advertisement area 50 (S201). For example, in the case of selecting advertisements 52 to be shown in the advertisement area 50A, the control unit obtains the number (5) of advertisements 52 to be shown in the advertisement area 50A, based on the "number of advertisements" field in the advertisement area table. Further, for example, in the case of selecting advertisements 52 to be shown in the advertisement area 50B, the control unit obtains the number (2) of advertisements 52 to be shown in the advertisement area 50B, based on the "number of advertisements" field in the advertisement area table.

Then, the control unit makes initial setting for a threshold B_{T} for a bid price (S202). For example, the control unit sets the initial value of the threshold B_{T}, based on a statistical value of the bid prices of the display candidate advertisements. As described above, the "display candidate advertisements" refer to advertisements correlated to the one or more keywords designated by the user, and the "statistical value" refers to an average, for example.

At step S202, the control unit accesses the database 12 to obtain the average of the bid prices of the display candidate advertisements. For example, the control unit supplies to the database 12 a command (for example, an SQL command) for instructing to return the average of the bid prices of the advertisements correlated to the one or more keywords designated by the user. In this case, the average of the bid prices of the advertisements correlated to the above described one or more keywords is calculated in the database 12, and sent to the advertisement server 10.

Note that the control unit may supply to the database 12 a command for instructing to return the total price of the bid prices of the advertisements correlated to the above described one or more keywords, and a command for instructing to return the number of advertisements correlated to the above described one or more keywords to obtain the total price of the bid prices of the advertisements correlated to the above described one or more keywords and the number of the advertisements correlated to the above described one or more keywords. Then, the control unit may calculate the above described average based on these values.

Alternatively, the control unit may send to the database 12 a command for instructing to return a list of bid prices of the advertisements correlated to the above described one or more keywords to obtain a list of the bid prices of the advertisements correlated to the above described one or more keywords. Then, the control unit may calculate the average based on the above described list.

After obtaining the average of the bid prices of the display candidate advertisements, as described above, the control unit sets the initial value of the threshold B_{T} based on the average. For example, the control unit sets the average itself as the initial value of the threshold B_{T}. Note that the control unit may set a predetermined value as the threshold B_{T} at step S202.

After execution of the processing at steps S201 and S202, the control unit obtains the number (N) of display candidate advertisements with a bid price higher than the threshold B_{T} (S203). For example, the control unit supplies to the database 12 a command for instructing to return the number of "advertisements correlated to the one or more keywords designated by the user and having a bid price higher than the threshold B_{T}". In this case, whether or not the one or more keywords designated by the user is correlated to each of the advertisements registered in the advertisement table and whether or not the bid price of each of the advertisements registered in the advertisement table is higher than the threshold B_{T} are determined in the database 12 (determination unit 72). Then, the number of "advertisements correlated to the one or more keywords designated by the user and having a bid price higher than the threshold B_{T}" is obtained, and sent to the advertisement server 10. The control unit obtains the number as the number (N) of display candidate advertisements with a bid price higher than the threshold B_{T}.

Note that the control unit may supply to the database 12 a command for instructing to return a list of "advertisements correlated to the one or more keywords designated by the user and having a bid price higher than the threshold B_{T}". Then, the control unit may calculate the number of "advertisements correlated to the one or more keywords designated by the user and having a bid price higher than the threshold B_{T}" based on the list, and may obtain the number as the number (N) of display candidate advertisements with a bid price higher than the threshold B_{T}.

After execution of the processing at step S203, the control unit (comparison unit 74) determines whether or not "M=N" is held (S204). That is, the control unit determines whether or not the number (M) of advertisements 52 obtained at step S201 is equal to the number (N) of display candidate advertisements obtained at step S203.

When it is determined that "M=N" is held, the control unit (advertisement selection unit 78) selects the N display candidate advertisements with a bid price higher than the threshold B_{T} as advertisements 52 to be shown in the advertisement area 50 (S206).

Thereafter, the control unit (display position determination unit 80) determines a display position of each of the advertisements selected at step S206 (S207). For example, when five advertisements are selected as advertisements 52 to be shown in the advertisement area 50A at step S206, the control unit determines an order for arranging these five advertisements, based on the index value information of each of these five advertisements (see FIG. 3A). In this case, the value in the "evaluation value" field in the index value table, for example, is used as the "index value information". Alternatively, at least one of the values in the "CTR" field, the "CVR" field, and the "purchase price" field in the index value table may be used, instead of the value in the "evaluation value" field. Note that the control unit may determine an order for arranging the above described five advertisements at random.

When it is not determined at step S204 that "M=N" is held, the control unit determines whether or not "M<N" is held (S205). That is, the control unit determines whether or not the number (N) of display candidate advertisements obtained at step S203 is larger than the number (M) of advertisements 52 obtained at step S201.

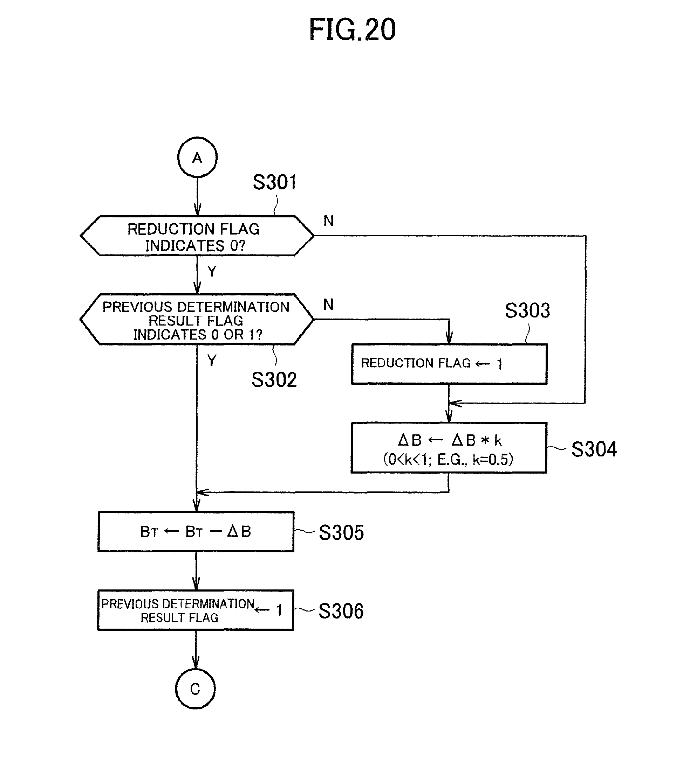

When it is determined that "M<N" is not held, that is, when "M>N" is held, the control unit determines whether or not the reduction flag indicates "0" (S301), as shown in FIG. 20.

A "reduction flag" is a flag indicating whether or not to reduce an increase/decrease value (ΔB) when increasing or decreasing the threshold B_{T} (see steps S305, S406). The reduction flag takes the value either "0" or "1". The value "0" indicates that the increase/decrease value (ΔB) is not reduced; the value "1" indicates that the increase/decrease value (ΔB) is reduced. At the start of execution of the advertisement selection processing, the reduction flag is initialized to "0".

When it is determined that the reduction flag indicates "0", the control unit determines whether or not a previous determination result flag indicates "0" or "1" (S302). Note that the processing at step S205 is repetitively executed until a predetermined condition is satisfied (that is, until the result of determination at step S204 or S401 comes to indicate "true (Y)"), as to be described later. A "previous determination result flag" serves to hold a result in previous determination at step S205. The previous determination result flag takes the value "0", "1", or "2". The value "1" indicates that a previous determination result shows "M>N"; the value "2" indicates that a previous determination result shows "M<N". At the start of execution of the advertisement selection processing, the previous determination result flag is initialized to "0".

When it is determined that the previous determination result flag indicates "0" or "1", the control unit (threshold change unit 76) decreases the threshold B_{T} (S305). That is, the control unit sets a value obtained by subtracting a correction value ΔB from the threshold B_{T} as a new threshold B_{T}. Further, the control unit sets the previous determination result flag to "1" (S306). Then, the control unit executes the processing at step S203.

Meanwhile, when it is determined that the previous determination result flag does not indicate either "0" or "1", that is, when the previous determination result flag indicates "2", the control unit sets the reduction flag to "1" (S303). Then, the control unit updates the correction value ΔB to a value obtained by multiplying the correction value ΔB by a coefficient k (0<k<1: for example, 0.5) (S304). Note that the processing at step S304 corresponds to the processing described with reference to (C) in FIG. 15. After execution of the processing at step S304, the control unit decreases the threshold B_{T} (S305), and sets the previous determination result flag to "1" (S306). Then, the control unit executes the processing at step S203.

When it is determined at step S301 that the reduction flag does not indicate "0", that is, when the reduction flag indicates "1", the control unit updates the correction value ΔB to a value obtained by multiplying the correction value ΔB by the coefficient k (0<k<1: for example, 0.5) (S304). Thereafter, the control unit decreases the threshold B_{T} (S305), and sets the previous determination result flag to "1" (S306). Then, the control unit executes the processing at step S203.

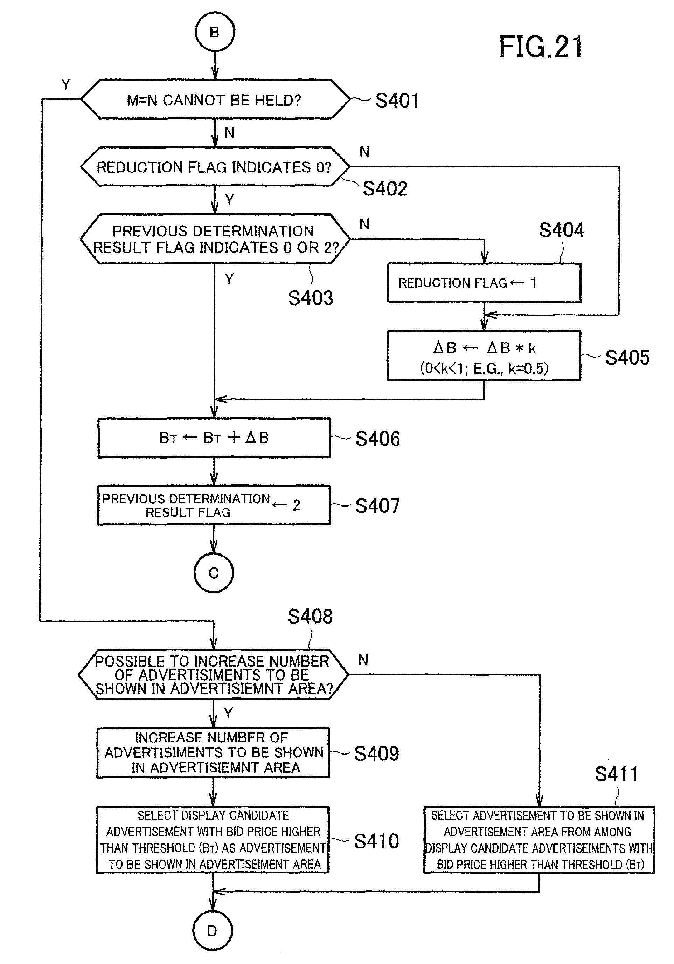

When it is determined at step S205 that "M<N" is held, the control unit determines whether or not it is a case in which "M=N" cannot be held (S401), as shown in FIG. 21. For example, when the two conditions (a) and (b) described below are both satisfied, the control unit determines that it is a case in which "M=N" cannot be held.
(a) the number of display candidate advertisements with the lowest bid price among the display candidate advertisements with a bid price higher than the threshold B_{T} is two or more; and
(b) the number of display candidate advertisements other than the display candidate advertisement with the lowest bid price among the display candidate advertisements with a bid price higher than the threshold B_{T} is smaller than the number (M) of advertisements 52 to be shown in the advertisement area 50.

In the example shown by (c) in FIG. 17, for example, the number of display candidate advertisements (A001, A005) with the lowest bid price among the display candidate advertisements (A001, A002, A004, A005, A006, A007) with a bid price higher than the threshold is two or more. Therefore, the above described condition (a) is satisfied. Further, the number (4) of display candidate advertisements (A002, A004, A006, A007) other than the display candidate advertisements with the lowest bid price among the display candidate advertisements (A001, A002, A004, A005, A006, A007) with a bid price higher than the threshold is smaller than the number (5) of advertisements 52 to be shown in the advertisement area 50A. Therefore, the above described condition (b) is satisfied as well. Therefore, in the example shown by (c) in FIG. 17, it is determined that it is a case in which "M=N" cannot be held.

Meanwhile, when it is not determined that it is a case in which "M=N" cannot be held (that is, when it is determined that "M=N" can be held), the control unit determines whether or not the reduction flag indicates "0" (S402). When it is determined that the reduction flag indicates "0", the control unit determines whether or not the previous determination result flag indicates "0" or "2" (S403).

When it is determined that the previous determination result flag indicates "0" or "2", the control unit (threshold change unit 76) increases the threshold B_{T} (S406). That is, the control unit sets a value obtained by adding the correction value ΔB to the threshold B_{T} as a new threshold B_{T}. Further, the control unit sets the previous determination result flag to "2" (S407). Thereafter, the control unit executes the processing at step S203.

Meanwhile, when it is determined that the previous determination result flag does not indicate either "0" or "2", that is, when the previous determination result flag indicates "1", the control unit sets the reduction flag to "1" (S404). Then, the control unit updates the correction value ΔB to a value obtained by multiplying the correction value ΔB by the coefficient k (0<k<1: for example, 0.5) (S405). Note that the processing at step S405 corresponds to the processing described with reference to (C) in FIG. 16. After execution of the processing at step S405, the control unit increases the threshold B_{T} (S406), and sets the previous determination result flag to "2" (S407). Then, the control unit executes the processing at step S203.

When it is determined at step S402 that the reduction flag does not indicate "0", that is, when the reduction flag indicates "1", the control unit updates the correction value ΔB to a value obtained by multiplying the correction value ΔB by the coefficient k (0<k<1: for example, 0.5) (S405). Thereafter, the control unit increases the threshold B_{T} (S406), and sets the previous determination result flag to "2" (S407). Then, the control unit executes the processing at step S203.

When it is determined at step S401 that it is a case in which "M=N" cannot be held, the control unit determines whether or not it is possible to increase the number of advertisements 52 to be shown in the advertisement area 50 (S408). The control unit makes this determination, based on the "increase flag" field in the advertisement area table. For example, when the increase flag for the advertisement area 50 indicates "1", the control unit determines that it is possible to increase the number of advertisements 52 to be shown in the advertisement area 50. Meanwhile, when the increase flag for the advertisement area 50 indicates "0", the control unit determines that it is not possible to increase the number of advertisements 52 to be shown in the advertisement area 50.

When it is determined that it is possible to increase the number of advertisements 52 to be shown in the advertisement area 50, the control unit increases the number of advertisements 52 to be shown in the advertisement area 50 to N (that is, the number of the display candidate advertisements with a bid price higher than the threshold B_{T}) (S409). Then, the control unit (advertisement selection unit 78) selects N display candidate advertisements with a bid price higher than the threshold B_{T} as advertisements 52 to be shown in the advertisement area 50 (S410).

Meanwhile, when it is not determined that it is possible to increase the number of advertisements 52 to be shown in the advertisement area 50, the control unit (advertisement selection unit 78) selects M advertisements 52 to be shown in the advertisement area 50 from among N advertisements with a bid price higher than the threshold B_{T} (S411).

At step S411, the control unit selects the M advertisements 52 to be shown in the advertisement area 50 from among the N display candidate advertisements, based on the index value information of each of the N display candidate advertisements with a bid price higher than the threshold B_{T}. In this case, the value in the "evaluation value" field in the index value table is used as the "index value information". Alternatively, at least one of the values in the "CTR" field, the "CVR" field, and the "purchase price" fields may be used instead of the value in the "evaluation value" field.

For example, the control unit initially confirms a display candidate advertisement other than a display candidate advertisement with the lowest bid price among the display candidate advertisements with a bid price higher than the threshold B_{T}, as an advertisement 52 to be shown in the advertisement area 50. In this case, supposing that the number of advertisements confirmed as advertisements 52 to be shown in the advertisement area 50 is N_{A}, M-N_{A} advertisements 52 among the M advertisements 52 to be shown in the advertisement area 50 are not yet confirmed at this stage. Therefore, based on the index value information of each of the display candidate advertisements with the lowest bid price among the display candidate advertisements with a bid price higher than the threshold B_{T}, the control unit selects M-N_{A} display candidate advertisements from among the display candidate advertisements with the lowest bid price, as remaining advertisements 52 to be shown in the advertisement area 50.

Note that the control unit may select M advertisements 52 to be shown in the advertisement area 50 at random from among N advertisements with a bid price higher than the threshold B_{T}, at step S411.

After execution of the processing at step S410 or S411, the control unit determines a display position of each of the advertisements selected at step S410 or S411 (S207). With the above, description on the processing shown in FIGs 19 to 21 is completed.

As shown in FIG. 18, after execution of the processing at step S103, the control unit of the advertisement server 10 notifies the e-commerce server 20 of the result of selection at step S103 (S104). For example, data on the advertisements selected at step S206, S410, or S411, and data indicating the result of determination at step S207 are sent to the e-commerce server 20.

When the above described notice is received by the e-commerce server 20, the control unit of the e-commerce server 20 generates product list page data (S105). For example, the control unit executes search processing based on the one or more keywords designated by the user, to thereby obtain a list of products satisfying the search condition (that is, a list of products correlated to the one or more keywords designated by the user). In this case, for example, a product of which product page includes the above described one or more keywords is determined as a product that satisfies the search condition, and a list of products of which product page includes the above described one or more keywords is obtained. Then, the product list page data is set such that the list of products obtained as described above is shown in the list area 46.

In the product list page data, advertisements 52 are embedded in the advertisement area 50A, 50B according to the notice from the advertisement server 10. For example, link information (URL) to the advertisement image 54 and the advertisement text 56 are embedded such that the advertisement image 54 and the advertisement text 56 of an advertisement selected as an advertisement 52 to be shown in the advertisement area 50A are shown at respective predetermined positions in the advertisement area 50A. The advertisement image 54 and the advertisement text 56 make link buttons to which link information to a shop page or a product page is correlated. Similarly, link information (URL) to the advertisement image 54 and the advertisement text 56 are embedded such that the advertisement image 54 and the advertisement text 56 of an advertisement selected as an advertisement 52 to be shown in the advertisement area 50B are shown at respective determined positions in the advertisement area 50B. Similar to the advertisement area 50A, the advertisement image 54 and the advertisement text 56 make link buttons to which link information to a shop page or a product page is correlated.

After execution of the processing at step S105, the control unit sends the product list page data to the user terminal 32 (S106). When the product list page data is received by the user terminal 32, the control unit of the user terminal 32 displays the product list page 40 on the display unit based on the product list page data (S107). Note that, in this case, the control unit obtains the advertisement image 54 from the advertisement server 10 (database 12), based on the link information to the advertisement image 54 embedded in the advertisement area 50A, 50B, and shows the advertisement image 54 in the advertisement area 50A. With the above, description on the processing shown in FIG. 18 is completed.

Note that although the e-commerce server 20 requests the advertisement server 10 to select advertisements 52 to be shown in the advertisement areas 50A, 50B of the product list page 40 in the processing shown in FIG. 18, the user terminal 32 may make the above described request with respect to the advertisement server 10. Below, processing in this case will be described referring to FIG. 18.

When the HTTP request and the search condition (the one or more keywords) sent from the user terminal 32 are received by the e-commerce server 20 (S101), the control unit of the e-commerce server 20 executes the processing at steps S105 and S106, without executing the processing at step S102, to send the product list page data to the user terminal 32.

In this case, as the processing at step S102 is not executed, the processing at steps S103 and S104 is not executed either.

In this case, a program for the user terminal 32 to request the advertisement server 10 to select advertisements 52 to be shown in the advertisement areas 50A, 50B is embedded in the product list page data sent to the user terminal 32. This program is written in a program language, such as, for example, Java Script (registered trademark) or the like. In this case as well, information necessary to request the advertisement server 10 to select advertisements 52 to be shown in the advertisement areas 50A, 50B is also sent to the user terminal 32 as a part of the product list page data. For example, information (for example, an URL, or the like) necessary to access the advertisement server 10, the one or more keywords designated by the user, the page ID of a product list page, advertisement area ID's of the advertisement areas 50A, 50B, or the like, are sent as a part of the product list page data.

When the above described product list page data is received by the user terminal 32, the control unit of the user terminal 32 requests the advertisement server 10 to select advertisements 52 to be shown in the advertisement areas 50A, 50B of the product list page 40, based on the above described program or the like. This processing is similar to that at step S102.

When the request from the user terminal 32 is received by the advertisement server 10, the control unit of the advertisement server 10 selects advertisements 52 to be shown in the advertisement areas 50A, 50B. This processing is similar to that at step S103. Then, after execution of the selection of the advertisements 52, the advertisement server 10 notifies the user terminal 32 of the result of selection. In this case, data on the advertisements selected at step S206, S410, or S411 (for example, link information (URL) to the advertisement image 54, the advertisement text 56, or the like) and data indicating the result of determination at step S207 are sent to the user terminal 32. Then, the control unit of the user terminal 32 displays the product list page 40 on the display unit. In this case, the control unit of the user terminal 32 shows the advertisements 52 in the respective advertisement areas 50A, 50B of the product list page 40 according to the data received from the advertisement server 10. The above described processing may be executed instead of the processing shown in FIG. 18.

According to the above described e-commerce system 1, advertisements with a higher bid price are selected as advertisements 52 to be shown in the advertisement area 50 of the product list page 40. According to the e-commerce system 1, as advertisements with a higher bid price are shown in the advertisement area 50, the provider of the advertisement service can receive an advantage of an increased income from advertisements. Further, according to the e-commerce system 1, as advertisements with a higher bid price is more likely shown in the advertisement area 50, a shop (advertiser) can receive an advantage of being able to adjust likelihood with which their advertisement is shown by adjusting the bid price.

Further, according to the e-commerce system 1, it is possible to select advertisements with a higher bid price as advertisements 52 to be shown in the advertisement area 50 without executing processing for sorting advertisements by a bid price as a key. That is, in the processing for sorting advertisements by a bid price as a key, advertisements are sorted so as to be arranged in an order of a higher bid price, for example, as a result of repetitive execution of "determining which bid price of the two display candidate advertisements is higher, and rearranging the display candidate advertisements based on the result". This may result in a larger processing load when the processing for sorting advertisements by a bid price as a key is used to execute the above described advertisement selection. On the contrary, according to the e-commerce system 1, the above described advertisement selection is achieved in processing with a relatively light processing load, such as processing of "comparing a bid price of each advertisement with a threshold, then calculating the number of advertisements with a bid price higher than the threshold, and comparing the number with the number of advertisements 52 to be shown in the advertisement area 50".

Note that in a case in which advertisements are shown in the product list page 40 in an order of a bid price, display of the advertisements in the product list page 40 remains constant as long as the bid prices remain unchanged. That is, the same advertisements 52 are kept shown in each advertisement area 50 of the product list page 40. On the contrary, according to the e-commerce system 1, it is possible to sort a plurality of advertisements selected as advertisements 52 to be shown in the advertisement area 50 by various parameters as a key. Thus, it is possible to change the advertisement 52 shown in each advertisement area 50 of the product list page 40 by changing a parameter used as a key for sorting as desired or at random, for example. As a result, this makes it possible to attract attention from a user. For example, it is possible to make it more likely that a user watches an advertisement by using a different key for sorting for every user or every generation of product list page data. Further, it is possible to make it more likely that a user watches an advertisement by using a different key for storing in accordance with season, environment, or a time band.

In the e-commerce system 1, a display position of each advertisement is determined based on the advertisement effect index value of each of advertisements selected as advertisements 52 to be shown in the advertisement area 50 (see step S207 in FIG. 19). For example, an advertisement with higher advertisement effect (that is, an advertisement with higher contribution in product sales at a shop) is shown at a position more likely to be seen by a user. According to the e-commerce system 1, as an advertisement with higher advertisement effect is shown at a position more likely to be seen by a user, increased sales at a shop can be expected. That is, according to the e-commerce system 1, a shop (advertiser) can receive an advantage of increased sales. Further, according to the e-commerce system 1, the provider of a virtual shopping mall can receive an advantage of increased commission revenue from a shop as the provider of a virtual shopping mall generally receives a commission in accordance with the sales at the shop.

In the e-commerce system 1, in a case where the number (N) of display candidate advertisements with a bid price higher than a threshold is larger than the number (M) of advertisements 52 to be shown in the advertisement area 50, M advertisements 52 to be shown in the advertisement area 50 are selected from among N display candidate advertisements, based on the advertisement effect index value of each of the N display candidate advertisements with a bid price higher than the threshold (see step S411 in FIG. 21). For example, display candidate advertisements with higher advertisement effect are selected as advertisements 52 to be shown in the advertisement area 50. According to the e-commerce system 1, with an arrangement in which advertisements with higher advertisement effect are shown, increased sales at a shop can be expected. That is, according to the e-commerce system 1, a shop (advertiser) can receive an advantage of increased sales. Further, according to the e-commerce system 1, the provider of a virtual shopping mall can receive an advantage of increased commission revenue from a shop as the provider of a virtual shopping mall generally receives a commission in accordance with the sales at the shop.

In the e-commerce system 1, the initial value of the threshold is determined, based on a statistical value (for example, an average) of the bid prices of display candidate advertisements (see step S203 in FIG. 19). When the initial value of the threshold differs significantly from a value of the threshold that makes the number of display candidate advertisements with a bid price higher than the threshold equal to the number of advertisements 52 to be shown in the advertisement area 50, the number of times at which to repeat execution of the processing of "comparing a bid price of each advertisement with a threshold, then calculating the number of advertisements with a bid price higher than the threshold, and comparing the number with the number of advertisements 52 to be shown in the advertisement area 50" increases. Regarding this point, according to the e-commerce system 1, it is possible to set the initial value of the threshold so as not to be significantly different from a value of the threshold that makes the number of display candidate advertisements with a bid price higher than the threshold equal to the number of advertisements 52 to be shown in the advertisement area 50. That is, according to the e-commerce system 1, it is possible to avoid increase of the number of times at which to repeat execution of the above described processing.

Note that the present invention is not limited to the above descried embodiments.

### [Modified Example 1]

In the above, the threshold change unit 76 changes the threshold (B_{T}) by adding the correction value (ΔB) to the threshold (B_{T}) or subtracting the correction value (ΔB) from the threshold (B_{T}) (see steps S305 in FIG. 20 and step S406 in FIG. 21). However, the aspect of the threshold change unit 76 is not limited to this aspect.

For example, in a case in which the number of display candidate advertisements with a bid price higher than the threshold is larger than the number of advertisements 52 to be shown in the advertisement area 50, the threshold change unit 76 may set a new threshold based on the bid prices of display candidate advertisements with a bid price higher than the threshold.

Specifically, the threshold change unit 76 may set a new threshold, based on a statistical value of the bid prices of display candidate advertisements with a bid price higher than the threshold. Note that a "statistical value" refers to an average, for example. For example, the threshold change unit 76 may set the average of the bid prices of display candidate advertisements with a bid price higher than the threshold, as a new threshold. Alternatively, for example, the threshold change unit 76 may set a new threshold based on the middle value between the maximum value and the minimum value of the bid prices of display candidate advertisements with a bid price higher than the threshold. Still alternatively, the threshold change unit 76 may set a new threshold based on a standard deviation of the bid prices of display candidate advertisements with a bid price higher than the threshold.

Meanwhile, for example, in a case where the number of display candidate advertisements with a bid price higher than the threshold is smaller than the number of advertisements 52 to be shown in the advertisement area 50, the threshold change unit 76 may set a new threshold based on the bid prices of display candidate advertisements with a bid price equal to or lower than the threshold.

Specifically, the threshold change unit 76 may set a new threshold, based on a statistical value of the bid prices of display candidate advertisements with a bid price equal to or lower than the threshold. Note that a "statistical value" refers to an average, for example. For example, the threshold change unit 76 may set the average of the bid prices of display candidate advertisements with a bid price equal to or lower than the threshold, as a new threshold. Alternatively, for example, the threshold change unit 76 may set a new threshold based on the middle value between the maximum value and the minimum value of the bid prices of display candidate advertisements with a bid price equal to or lower than the threshold. Still alternatively, the threshold change unit 76 may set a new threshold based on a standard deviation of the bid prices of display candidate advertisements with a bid price equal to or lower than the threshold.

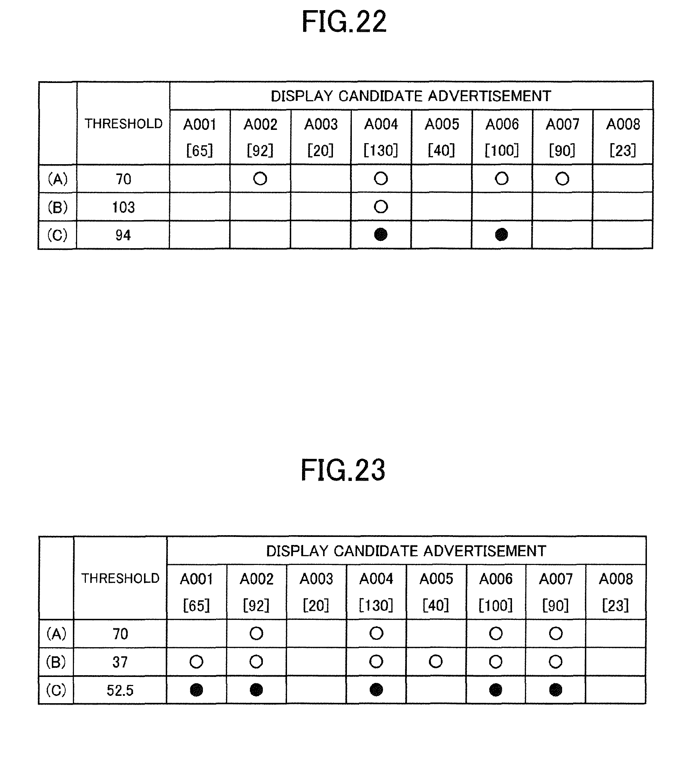

Below, a process of advertisement selection that is executed involving the above described threshold change unit 76 will be described. FIGs 22 and 23 explain one example of a process of advertisement selection that is executed involving the above described threshold change unit 76.

FIG. 22 explains one example of a process for selecting advertisements 52 to be shown in the advertisement area 50B. FIG. 23 explains one example of a process for selecting advertisements 52 to be shown in the advertisement area 50A. Here again, a case is assumed in which a user designates the word "bag" as the keyword, similar to the case shown in FIGs 15 and 16. Further, a case is assumed in which advertisements with advertisement ID's "A001" to "A008" are display candidate advertisements. In FIGs 22 and 23, a case is assumed in which the bid prices of the advertisements with advertisements ID's "A002", "A005", "A007", and "A008" are "92", "40", "90", and "23", respectively.

Initially, a process for selecting advertisements 52 to be shown in the advertisement area 50B will be described with reference to FIG. 22. Similar to the case shown in FIG. 15, the initial value of the threshold is initially set in this case as well. In a case where the average of the bid prices of display candidate advertisements is set as the initial value, the threshold is set to "70" (see (A) in FIG. 22). Then, the determination unit 72 determines whether or not the bid price of each display candidate advertisement is higher than the threshold (70).

As shown by (A) in FIG. 22, as the number of display candidate advertisements with a bid price higher than the threshold (70) is four, the comparison unit 74 compares the number (4) of the display candidate advertisements with a bid price higher than the threshold (70) and the number (2) of advertisements 52 to be shown in the advertisement area 50B.

In this case, as the number (4) of the display candidate advertisements with a bid price higher than the threshold (70) is larger than the number (2) of advertisements 52 to be shown in the advertisement area 50B, the threshold change unit 76 increases the threshold to narrow down the display candidate advertisements. That is, the threshold change unit 76 sets the average (103) of the bid prices of the display candidate advertisements with a bid price higher than the threshold (70) as a new threshold (see (B) in FIG. 22). Then, the determination unit 72 determines whether or not the bid price of each display candidate advertisement is higher than the threshold (103).

As shown by (B) in FIG. 22, as the number of display candidate advertisement with a bid price higher than the threshold (103) is one, the comparison unit 74 compares the number (1) of the display candidate advertisement with a bid price higher than the threshold (103) and the number (2) of advertisements 52 to be shown in the advertisement area 50B.

In this case, as the number (1) of the display candidate advertisement with a bid price higher than the threshold (103) is smaller than the number (2) of advertisements 52 to be shown in the advertisement area 50B, the threshold change unit 76 decreases the threshold in order to modify the narrowing down of the display candidate advertisements. That is, the threshold change unit 76 sets the average (94) of the bid prices of display candidate advertisements with a bid price higher than the previous threshold (70) and equal to or lower than the current threshold (103) as a new threshold (see (C) in FIG. 22). Then, the determination unit 72 determines whether or not the bid price of each display candidate advertisement is higher than the threshold (94).

As shown by (C) in FIG. 22, as the number of display candidate advertisements with a bid price higher than the threshold (94) is two, the comparison unit 74 compares the number (2) of the display candidate advertisements with a bid price higher than the threshold (94) and the number (2) of advertisements 52 to be shown in the advertisement area 50B.

In this case, as the number (2) of the display candidate advertisements with a bid price higher than the threshold is equal to the number (2) of advertisements 52 to be shown in the advertisement area 50B, the advertisement selection unit 78 selects the two display candidate advertisements with a bid price higher than the threshold (94) as the advertisements 52 to be shown in the advertisement area 50B. That is, the display candidate advertisements (A004, A006) with the first and second highest bid prices are selected as the advertisements 52 to be shown in the advertisement area 50B. That is, display candidate advertisements with a higher bid price is selected as the advertisements 52 to be shown in the advertisement area 50B.

In the above described process of advertisement selection, processing for sorting display candidate advertisements by a bid price as a key is not executed. The above described advertisement selection is achieved in processing with a relatively light processing load, such as processing of "comparing a bid price of each advertisement with a threshold, then calculating the number of advertisements with a bid price higher than the threshold, and comparing the number with the number of advertisements 52 to be shown in the advertisement area 50".

Below, a process for selecting advertisements 52 to be shown in the advertisement area 50A will be described with reference to FIG. 23. Similar to the case of selection of advertisements 52 to be shown in the advertisement area 50B, the initial value of the threshold is initially set in this case as well. In a case where the average of the bid prices of display candidate advertisements is set as the initial value of the threshold, the threshold is set to "70" (see (A) in FIG. 23). Then, the determination unit 72 determines whether or not the bid price of each display candidate advertisement is higher than the threshold (70).

As shown by (A) in FIG. 23, as the number of display candidate advertisements with a bid price higher than the threshold (70) is four, the comparison unit 74 compares the number (4) of the display candidate advertisements with a bid price higher than the threshold (70) and the number (5) of advertisements 52 to be shown in the advertisement area 50A.

In this case, as the number (4) of the display candidate advertisements with a bid price higher than the threshold (70) is smaller than the number (5) of advertisements 52 to be shown in the advertisement area 50A, the threshold change unit 76 decreases the threshold in order to modify the narrowing down of the display candidate advertisements. That is, the threshold change unit 76 sets the average (37) of the bid prices of display candidate advertisements with a bid price equal to or lower than the threshold (70) as a new threshold (see (B) in FIG. 23). Then, the determination unit 72 determines whether or not the bid price of each display candidate advertisement is higher than the threshold (37).

As shown by (B) in FIG. 23, the number of display candidate advertisements with a bid price higher than the threshold (37) is six, the comparison unit 74 compares the number (6) of the display candidate advertisements with a bid price higher than the threshold (37) and the number (5) of advertisements 52 to be shown in the advertisement area 50A.

In this case, as the number (6) of the display candidate advertisements with a bid price higher than the threshold (37) is larger than the number (5) of advertisements 52 to be shown in the advertisement area 50A, the threshold change unit 76 increases the threshold in order to narrow down the display candidate advertisements. That is, the threshold change unit 76 sets the average (52.5) of the bid prices of display candidate advertisements with a bid price higher than the current threshold (37) and equal to or lower than the previous threshold (70) as a new threshold (see (C) in FIG. 23). Then, the determination unit 72 determines whether or not the bid price of each display candidate advertisement is higher than the threshold (52.5).

As shown by (C) in FIG. 23, as the number of display candidate advertisements with a bid price higher than the threshold (52.5) is five, the comparison unit 74 compares the number (5) of the display candidate advertisements with a bid price higher than the threshold (52.5) and the number (5) of advertisements 52 to be shown in the advertisement area 50A.

In this case, as the number (5) of the display candidate advertisements with a bid price higher than the threshold (52.5) is equal to the number (5) of advertisements 52 to be shown in the advertisement area 50A, the advertisement selection unit 78 selects the five display candidate advertisements with a bid price higher than the threshold (52.5) as the advertisements 52 to be shown in the advertisement area 50A. That is, the display candidate advertisements (A001, A002, A004, A006, A007) with the first to fifth highest bid prices are selected as the advertisements 52 to be shown in the advertisement area 50B. That is, display candidate advertisements with a higher bid price is selected as the advertisements 52 to be shown in the advertisement area 50B.

Note that in the above described process of advertisement selection, processing for sorting display candidate advertisements by a bid price as a key is not executed. As the above described advertisement selection is achieved in processing with a relatively light processing load, such as processing of "comparing a bid price of each advertisement with a threshold, then calculating the number of advertisements with a bid price higher than the threshold, and comparing the number with the number of advertisements 52 to be shown in the advertisement area 50".

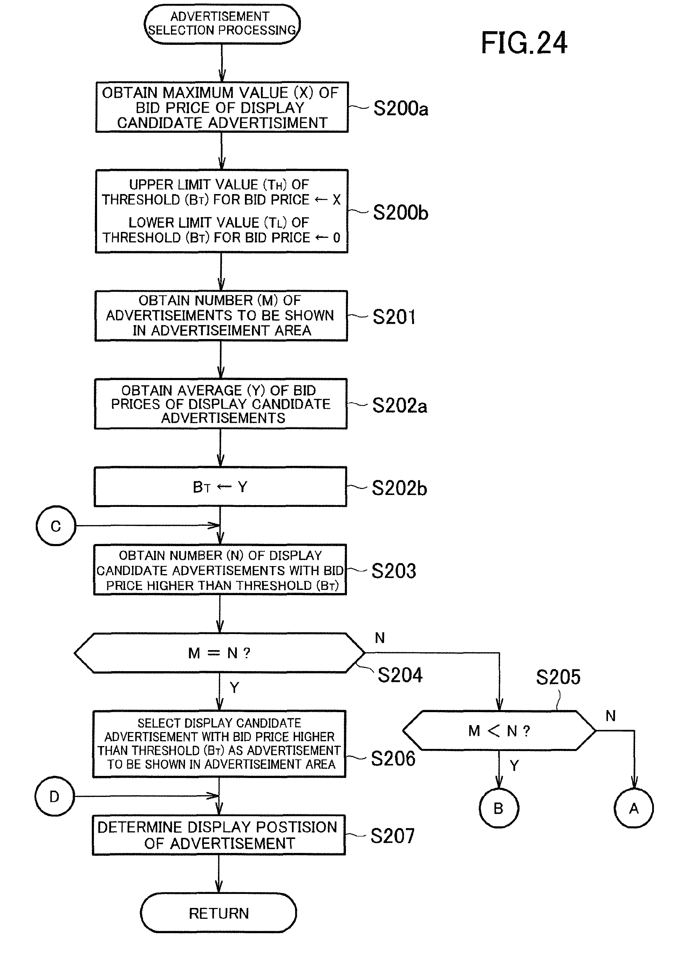

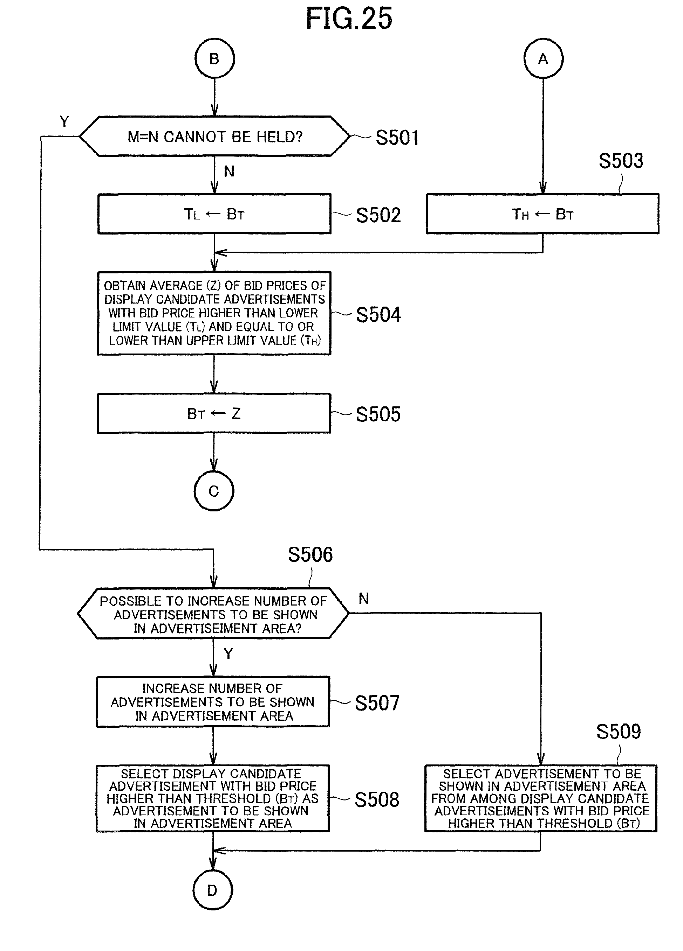

Below, advertisement selection processing that is executed when the threshold is changed based on the average (the statistical value) of the bid prices of display candidate advertisements will be described. In this case, advertisement selection processing, such as is shown in FIGs 24 and 25, for example, is executed at step S103 in FIG. 18, instead of the advertisement selection processing shown in FIGs 19 to 21. In FIG. 24, a step where processing similar to that shown in FIG. 19 is executed is given the same reference numeral.

As shown in FIG. 24, the control unit initially accesses the database 12 to obtain the maximum value (X) of the bid prices of the display candidate advertisements (S200a). Then, the control unit sets the upper limit value T_{H} of the threshold B_{T} for the bid price to the maximum value (X) obtained at step S200a, and sets the lower limit value T_{L} of the threshold B_{T} for the bid price to "0" (S200b). Note that the upper limit values T_{H} and the lower limit value T_{L} are referred to in changing the threshold B_{T} (see step S504 in FIG. 25).

Further, the control unit obtains the number (M) of advertisements 52 to be shown in the advertisement area 50 (S201). This processing is similar to that shown in FIG. 19. Further, the control unit accesses the database 12 to obtain the average (Y) of the bid prices of the display candidate advertisements (S202a). Then, the control unit sets the initial value of the threshold B_{T} for the bid price to the average (Y) obtained at step S202a (S202b). Thereafter, the control unit obtains the number (N) of display candidate advertisements with a bid price higher than the threshold B_{T} (S203). Subsequent processing (processing at steps S203 to S207) is similar to that shown in in FIG. 19, and thus not explained here.

When it is determined at step S205 that "M<N" is not held, that is, when "M>N" is held, the control unit updates the upper limit value T_{H} of the threshold B_{T} to the current threshold B_{T} (S503), as shown in FIG. 25. Further, the control unit accesses the database 12 to obtain the average (Z) of the bid prices of display candidate advertisements with a bid price higher than the lower limit value T_{L} and equal to or lower than the upper limit value T_{H} (S504). Then, the control unit sets the average (Z) obtained at step S504 as a new threshold B_{T} (S505). After execution of the processing at step S505, the control unit executes the processing at step S203.

Meanwhile, when it is determined at step S205 that "M<N" is held, the control unit determines whether or not it is a case in which "M=N" cannot be held, as shown in FIG. 25 (S501). The processing at step S501 is similar to that at step S401 in FIG. 21.

When it is not determined that it is a case in which "M=N" cannot be held, the control unit updates the lower limit value T_{L} of the threshold B_{T} to the current threshold B_{T} (S502). Further, the control unit accesses the database 12 to obtain the average (Z) of the bid prices of display candidate advertisements with a bid price higher than the lower limit value T_{L} and equal to or lower than the upper limit value T_{H} (S504). Then, the control unit sets the average (Z) obtained at step S504 as a new threshold B_{T} (S505). After execution of the processing at step S505, the control unit executes the processing at step S203.

Meanwhile, when it is determined that it is a case in which "M=N" cannot be held, the control unit executes the processing at steps S506 to S509. The processing at steps S506 to S509 is similar to that at steps S408 to S411. With the above, description on the processing at FIGs 24 and 25 is completed.

In the above describe manner as well, it is possible to select advertisements with a higher bid price as advertisements 52 to be shown in the advertisement area 50, without executing processing for sorting advertisements by a bid price as a key.

### [Modified Example 2]

Although it is described in the above that advertisement selection processing is executed for every advertisement area 50, advertisement selection processing may be executed while considering a plurality of advertisement areas 50A, 50B set in the product list page 40 as a single advertisement area. Below, advertisement selection processing in such a case will be described, referring to FIGs 19 to 21.

In executing advertisement selection processing while considering the advertisement areas 50A, 50B as a single advertisement area, the control unit obtains a value that is an addition of the number (5) of advertisements 52 to be shown in the advertisement area 50A and the number (2) of advertisements 52 to be shown in the advertisement area 50B as the number (M) of advertisements 52 to be shown in the advertisement area.

Since M display candidate advertisements with a bid price higher than the threshold are to be selected at step S206, seven advertisements are selected at step S206 in this case. Then, at step S207, the control unit allocates the seven advertisements selected at step S206 to either the advertisement area 50A or the advertisement area 50B. For example, the control unit allocates the seven advertisements to either the advertisement area 50A or the advertisement area 50B, based on the index value information on each of the seven advertisements selected at step S206.

In this case, for example, the value in the "evaluation value" field in the index value table is used as the "index value information". Alternatively, other advertisement effect index values may be used instead of the value in the "evaluation value" field. That is, for example, at least one of the values in the "CTR" field, the "CVR" field, and the "purchase price" field in the index value table may be used.

In this case, priority orders are set to the advertisement areas 50A, 50B. Priority orders of the advertisement areas 50A, 50B are set such that a higher priority order is set to an advertisement area 50 more likely to be seen by a user (that is, a more outstanding advertisement area 50), for example. In a case where priority orders are set to the advertisement areas 50A, 50B, a "priority order" field may be added to the advertisement area table, so that a priority order of each of the advertisement areas 50A, 50B is registered in the "priority order" field.

For example, the control unit allocates the seven advertisements selected at step S206 to an advertisement area 50 with a higher priority order, beginning with one with a higher evaluation value. With the above, an advertisement with higher advertisement effect is shown in an advertisement area 50 more likely to be seen by a user.

Note that the control unit may allocate the seven advertisements selected at step S206 to either the advertisement area 50A or the advertisement area 50B at random.

After completion of allocation of the seven advertisements selected at step S206, the control unit determines display positions of advertisements allocated to each of the advertisement areas 50A, 50B. For example, the control unit determines an order for arranging the five advertisements allocated to the advertisement area 50A (see FIG. 3A). Further, the control unit determines display positions of the two advertisements allocated to the advertisement area 50B.

Note that in a case where the advertisement selection processing is executed while considering the advertisement areas 50A, 50B as a single advertisement area, the control unit determines at step S401 in FIG. 21 whether or not an advertisement area 50 adapted to increase of the number of displayable advertisements 52 is included in the plurality of advertisement areas 50A, 50B considered as a single advertisement area. When an advertisement area 50 adapted to increase of the number of displayable advertisements 52 is included, the control unit increases the number (M) of advertisements 52 to be shown in the advertisement area to N (that is, the number of the display candidate advertisements with a bid price higher than the threshold).

In a case where the advertisement selection processing is executed for every advertisement area 50, it is resulted that the same advertisement (for example, A004 or A006) is selected both as an advertisement 52 to be shown in the advertisement area 50A and as an advertisement 52 to be shown in the advertisement area 50B, as shown in FIGs 15 and 16, for example. Regarding this point, an arrangement in which the advertisement selection processing is executed while considering a plurality of advertisement areas 50A, 50B as a single advertisement area, as described above, makes it possible to avoid duplication in selection of the same advertisement as an advertisement 52 to be shown in the advertisement area 50A and also as an advertisement 52 to be shown in the advertisement area 50B.

Note that it is possible to execute the advertisement selection processing shown in FIGs 24 and 25 while considering the plurality of advertisement areas 50A, 50B in the product list page 40 as a single advertisement area.

### [Modified Example 3]

Priority orders may be set to the advertisement areas 50A, 50B so that an advertisement with a higher bid price is shown in an advertisement area 50 with a higher priority order.

In this case, priority orders of the advertisement areas 50A, 50B are set such that, for example, a higher priority order is given to an advertisement area 50 more likely to be seen by a user (that is, a more outstanding advertisement area 50). In a case where priority orders are set to the advertisement areas 50A, 50B, an "priority order" field may be added to the advertisement area table, so that a priority order of each of the advertisement areas 50A, 50B is registered in the "priority order" field.

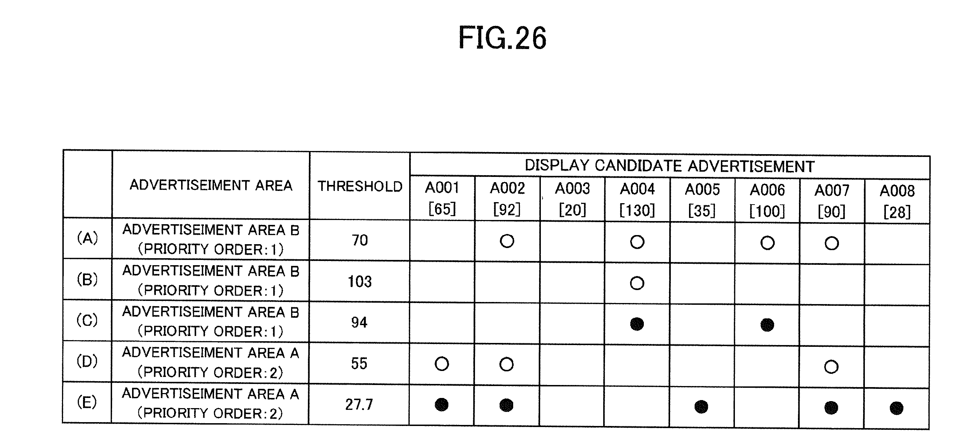

Below, a process for advertisement selection in showing advertisements with a high bid price in an advertisement area 50 with a high priority order will be described. FIG. 26 explains one example of a process for advertisement selection in showing advertisements with a high bid price in an advertisement area 50 with a high priority order.

In FIG. 26, it is assumed that the advertisement area 50B has a higher priority order than that of the advertisement area 50A. That is, a case is assumed in which the priority order of the advertisement area 50B is "1", and that of the advertisement area 50A is "2". In FIG. 26, "advertisement area A" represents the advertisement area 50A, and "advertisement area B" represents the advertisement area 50B. Here again, a case is assumed in which a user designates the word "bag" as the keyword, and a case is assumed in which advertisements with advertisement ID's "A001" to "A008" are display candidate advertisements. Further, in FIG. 26, a case is assumed in which the bid prices of the advertisements with advertisement ID's "A002", "A005", "A007", and "A008" are "92", "35", "90", and "28", respectively.

In this case, processing for selecting advertisements 52 to be shown in the advertisement area 50B with the priority order "1" is initially executed. That is, the initial value of the threshold is initially set. For example, the average (70) of the bid prices of the display candidate advertisements is set as the initial value of the threshold (see (A) in Fig. 26). Then, the determination unit 72 determines whether or not the bid price of each display candidate advertisement is higher than the threshold (70).

As shown by (A) in FIG. 26, as the number of display candidate advertisements with a bid price higher than the threshold (70) is four, the comparison unit 74 compares the number (4) of the display candidate advertisements with a bid price higher than the threshold (70) and the number (2) of advertisements 52 to be shown in the advertisement area 50B.

In this case, as the number (4) of the display candidate advertisements with a bid price higher than the threshold (70) is larger than the number (2) of advertisements 52 to be shown in the advertisement area 50B, the threshold change unit 76 increases the threshold in order to narrow down the display candidate advertisements. That is, the threshold change unit 76 sets the average (103) of the bid prices of the display candidate advertisements with a bid price higher than the threshold (70) as a new threshold (see (B) in FIG. 26). Then, the determination unit 72 determines whether or not the bid price of each display candidate advertisement is higher than the threshold (103).

As shown by (B) in FIG. 26, the number of display candidate advertisements with a bid price higher than the threshold (103) is one, the comparison unit 74 compares the number (1) of the display candidate advertisements with a bid price higher than the threshold (103) and the number (2) of advertisements 52 to be shown in the advertisement area 50B.

In this case, as the number (1) of the display candidate advertisements with a bid price higher than the threshold (103) is smaller than the number (2) of advertisements 52 to be shown in the advertisement area 50B, the threshold change unit 76 decreases the threshold to modify the narrowing down of the display candidate advertisements. That is, the threshold change unit 76 sets the average (94) of the bid prices of display candidate advertisements with a bid price higher than the previous threshold (70) and equal to or lower than the current threshold (103) as a new threshold (see (C) in FIG. 26). Then, the determination unit 72 determines whether or not the bid price of each display candidate advertisement is higher than the threshold (94).

As shown by (C) in FIG. 26, as the number of display candidate advertisements with a bid price higher than the threshold (94) is two, the comparison unit 74 compares the number (2) of the display candidate advertisements with a bid price higher than the threshold (94) and the number (2) of advertisements 52 to be shown in the advertisement area 50B.

In this case, as the number (2) of the display candidate advertisements with a bid price higher than the threshold (94) is equal to the number (2) of advertisements 52 to be shown in the advertisement area 50B, the advertisement selection unit 78 selects the two display candidate advertisements with a bid price higher than the threshold (94) as the advertisements 52 to be shown in the advertisement area 50B. That is, the display candidate advertisements (A004, A006) with the first and second highest bid prices are selected as the advertisements 52 to be shown in the advertisement area 50B.

After completion of the selection of advertisements 52 to be shown in the advertisement area 50B with the priority order "1", processing for selecting advertisements 52 to be shown in an advertisement area 50A with the priority order "2" is executed.

In this case, advertisements 52 to be shown in the advertisement area 50A with the priority order "2" are selected from among the display candidate advertisements that are not selected as the advertisements 52 to be shown in the advertisement area 50B with the priority order "1".

As shown by (C) in FIG. 26, as a display candidate advertisement with a bid price higher than the threshold (94) has been already selected as an advertisement 52 to be shown in the advertisement area 50A, an advertisement 52 to be shown in the advertisement area 50A is selected from among display candidate advertisements with a bid price equal to or smaller than "94" . That is, the threshold "94", which is used in determination of advertisements 52 to be shown in the advertisement area 50B, is set as the upper limit value, and advertisements 52 to be shown in the advertisement area 50A are selected from among display candidate advertisements with a bid price equal to or lower than the upper limit value.

In this case, the initial value of the threshold is initially set. For example, the average (55) of the bid prices of display candidate advertisements with a bid price equal to or lower than the upper limit value (94) is set as the initial value of the threshold (see (D) in FIG. 26). Then, the determination unit 72 determines whether or not the bid price of each display candidate advertisement with a bid price equal to or lower than the upper limit value (94) is higher than the threshold (55).

As shown by (D) in FIG. 26, as the number of display candidate advertisements with a bid price higher than the threshold (55) and equal to or lower than the upper limit value (94) is three, the comparison unit 74 compares the number (3) and the number (5) of advertisements 52 to be shown in the advertisement area 50A.

In this case, as the number (3) of the display candidate advertisements with a bid price higher than the threshold (55) and equal to or lower than the upper limit value (94) is smaller than the number (5) of advertisements 52 to be shown in the advertisement area 50A, the threshold change unit 76 decreases the threshold in order to modify the narrowing down of the display candidate advertisements. That is, the threshold change unit 76 sets the average (27.7) of the bid prices of display candidate advertisements with a bid price equal to or lower than the threshold (55) as a new threshold (see (E) in FIG. 26).

Note that if the number of display candidate advertisements with a bid price higher than the threshold (55) and equal to or lower than the upper limit value (94) is larger than the number (5) of advertisements 52 to be shown in the advertisement area 50A, the threshold change unit 76 increases the threshold in order to narrow down the display candidate advertisements. That is, the threshold change unit 76 sets the average of the bid prices of the display candidate advertisements with a bid price higher than the threshold (55) and equal to or lower than the upper limit value (94) as a new threshold.

When a new threshold is set, the determination unit 72 determines whether or not the bid price of each display candidate advertisement with a bid price equal to or lower than the upper limit value (94) is higher than the threshold (27.7). As shown by

(E) in FIG. 26, as the number of display candidate advertisements with a bid price higher than the threshold (27.7) and equal to or lower than the upper limit value (94) is five, the comparison unit 74 compares the number (5) and the number (5) of advertisements 52 to be shown in the advertisement area 50A.

In this case, as the number (5) of the display candidate advertisements with a bid price higher than the threshold (27.7) and equal to or lower than the upper limit value (94) is equal to the number (5) of advertisements 52 to be shown in the advertisement area 50A, the advertisement selection unit 78 selects the two display candidate advertisements with a bid price higher than the threshold (27.7) and equal to or lower than the upper limit value (94) as advertisements 52 to be shown in the advertisement area 50A. That is, the display candidate advertisements (A001, A002, A005, A007, A008) with the first to fifth highest bid prices among the display candidate advertisements not selected as advertisements 52 to be shown in the advertisement area 50B are selected as advertisements 52 to be shown in the advertisement area 50B.

In the above described example shown in FIG. 26, the display candidate advertisements (A004, A006) with the first and second highest bid prices among all of the display candidate advertisements (A001 to A008) are selected as advertisements to be shown in the advertisement area 50B with the priority order "1", and the display candidate advertisements (A001, A002, A005, A007, A008) with the third to seventh highest bid prices are selected as advertisements to be shown in the advertisement area 50A with the priority order "2". That is, display candidate advertisements with a high bid price is selected as advertisements 52 to be shown in an advertisement area 50 with a high priority order (in other words, an advertisement area 50 more likely to be seen by a user).

In the above described example shown in FIG. 26, no advertisement is selected as both of an advertisement 52 to be shown in the advertisement area 50A and an advertisement 52 to be shown in the advertisement area 50B.

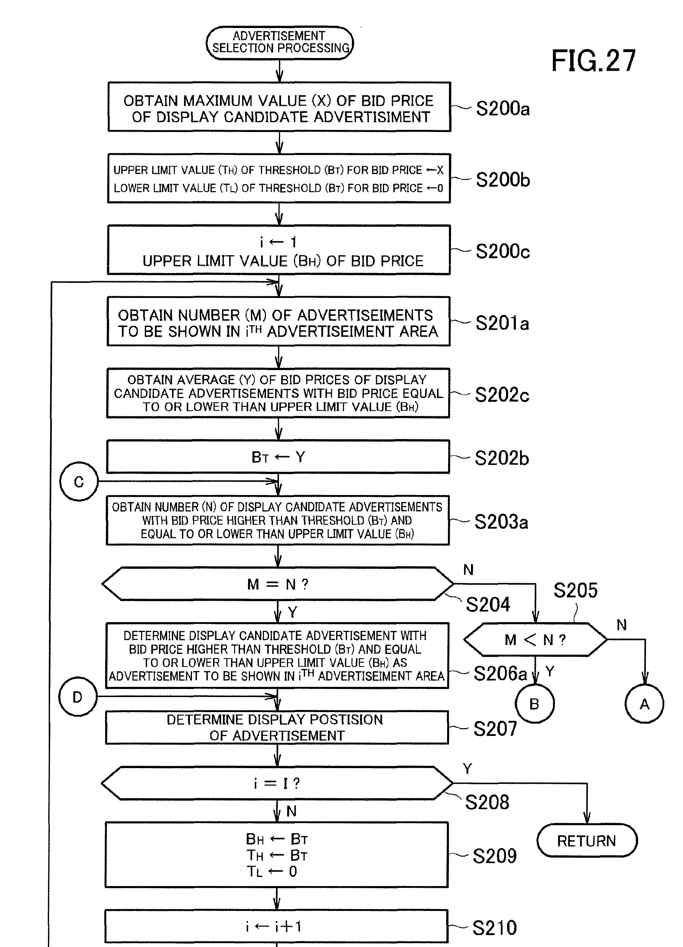

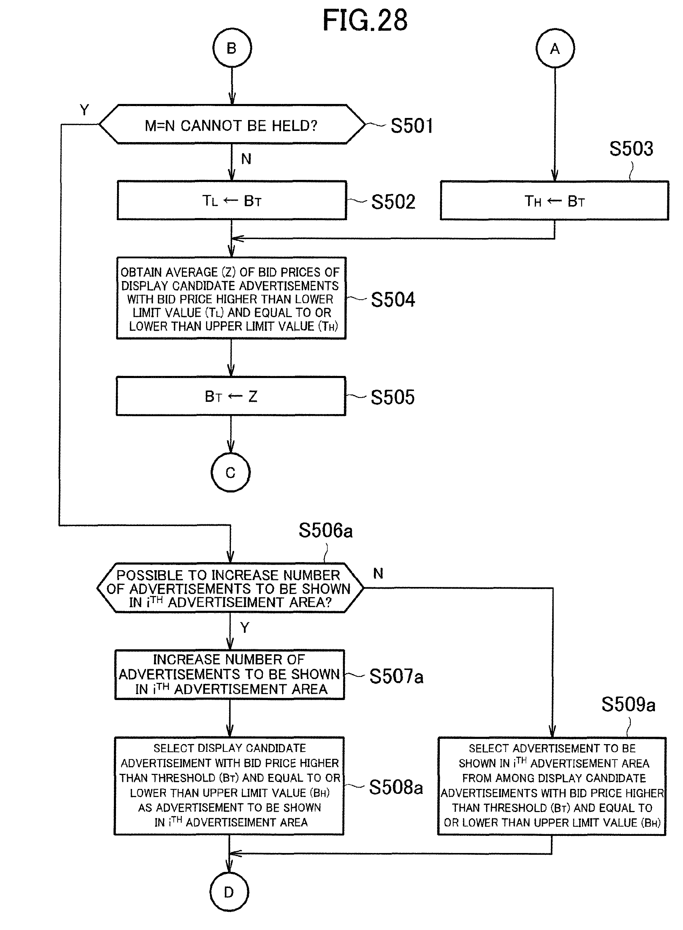

Below, advertisement selection processing for achieving the above described advertisement selection will be described. In this case, advertisement selection processing, such as is shown in FIGs 27 and 28, for example, is executed at step S103 in FIG. 18, instead of the advertisement selection processing, such as is shown in FIGs 24 and 25. Note that in FIGs 27 and 28, a step where processing similar to that in FIGs 24 and 25 is executed is given the same reference numeral.

As shown in FIG. 27, the control unit initially accesses the database 12 to obtain the maximum value (X) of the bid prices of display candidate advertisements (S200a). Then, the control unit sets the upper limit value T_{H} of the threshold B_{T} for a bid price to the maximum value (X) obtained at step S200a, and sets the lower limit value T_{L} of the threshold B_{T} for a bid price to "0" (S200b). The processing is similar to that shown in FIG. 24. The upper limit value T_{H} and the lower limit value T_{L} are referred to in changing the threshold B_{T} (see step S504 in FIG. 28).

Further, the control unit sets the variable i to "1", and the upper limit value B_{H} for a bid price to the maximum value (X) obtained at step S200a (S200c). This upper limit value B_{H} is used to limit advertisements 52 to be shown in the advertisement area 50 with a priority order "i" to display candidate advertisements with a bid price equal to or lower than the upper limit value B_{H}. An advertisement area 50 with a priority order "i" will be hereinafter referred to as "the i^{th} advertisement area 50".

After execution of step S200c, the control unit obtains the number (M) of advertisements 52 to be shown in the i^{th} advertisement area 50 (S201a). Further, the control unit obtains the average (Y) of the bid prices of display candidate advertisements with a bid price equal to or lower than the upper limit value B_{H} (S202c). Then, the control unit sets the initial value of the threshold B_{T} for a bid price to the average (Y) obtained at step S202c (S202b).

After execution of the processing at step S202b, the control unit obtains the number (N) of display candidate advertisements with a bid price higher than the threshold B_{T} and equal to or lower than the upper limit value B_{H} (S203a), and thereafter, executes the processing at step S204. The processing at steps S204, S205 is similar to that shown in FIG. 24.

When it is determined at step S204 that "M=N" is held, the control unit selects N display candidate advertisements with a bid price higher than the threshold B_{T} and equal to or lower than the upper limit value B_{H} as advertisements 52 to be shown in the i^{th} advertisement area 50 (S206a). Then, the control unit determines a display position of each of the advertisements selected at step S206a in the i^{th} advertisement area 50 (S207). The processing at step S207 is similar to that shown in FIG. 24.

After execution of the processing at step S207, the control unit determines whether or not the value of the variable i is equal to the total number I of the advertisement areas 50 set in the product list page 40 (S208). A case in which the value of the variable i is equal to the total number I refers to a case in which selection of advertisements is completed with respect to all of the advertisement areas 50. In this case, the advertisement selection processing is completed, and the control unit executes the processing at step S104 in FIG. 15.

Meanwhile, when it is determined that the value of the variable i is not equal to the total number I, the control unit sets both of the upper limit value B_{H} for the bid price and the upper limit value T_{H} for the threshold B_{T} to the current threshold B_{T}, and the lower limit value T_{L} for the threshold B_{T} to "0" (S209). Further, the control unit increases the value of the variable i by one (S210). Then, the control unit executes the processing at step S201a. In this case, processing for selecting advertisements to be shown in the next advertisement area 50 has been executed.

When it is determined at step S205 that "M<N" is not held, that is, when "M>N" is held, the control unit executes the processing at step S503, as shown in FIG. 28. Meanwhile, when it is determined at step S205 that "M<N" is not held, the control unit executes the processing at step S501, as shown in FIG. 28. The processing at steps S501 to S505 in FIG. 28 is similar to that shown in FIG. 25.

When it is determined at step S501 that it is a case in which "M=N" cannot be held, the control unit determines whether or not it is possible to increase the number of advertisements 52 to be shown in the i^{th} advertisement area 50 (S506a). When it is determined that it is possible to increase the number of advertisement 52 to be shown in the i^{th} advertisement area 50, the control unit increases the number of advertisements 52 to be shown in the i^{th} advertisement area 50 to N (that is, the number of the display candidate advertisements with a bid price higher than the threshold B_{T} and equal to or lower than the upper limit value B_{H}) (S507a). Then, the control unit selects N display candidate advertisements with a bid price higher than the threshold B_{T} and equal to or lower than the upper limit value B_{H} as the advertisements to be shown in the i^{th} advertisement area 50 (S508a). The processing at steps S506a to S508a is equal to that at steps S506 to S508 in FIG. 25.

Meanwhile, when it is determined that is not possible to increase the number of advertisements 52 to be shown in the i^{th} advertisement area 50, the control unit selects M advertisements 52 to be shown in the i^{th} advertisement area 52 from among the N display candidate advertisements with a bid price higher than the threshold B_{T} and equal to or lower than the upper limit value B_{H} (S509a). The processing at step S509a is similar to that at step S509 in FIG. 25.

According to the above described advertisement selection processing shown in FIGs 27 and 28, it is possible to select advertisements with a high bid price as advertisements 52 to be shown in an advertisement area 50 with a high priority order (in other words, an advertisement area 50 more likely to be seen by a user). Further, according to the above described advertisement selection processing shown in FIGs 27 and 28, it is possible to avoid duplication in selection of an advertisement as an advertisement to be shown in the advertisement area 50A and also as one in the advertisement area 50B.

### [Modified Example 4]

In the above described advertisement selection processing, an advertisement 52 to be shown in the advertisement area 50 is selected to finish the advertisement selection processing only when "M=N" is held or when "M=N" cannot be held (see S204, S206 or S206a). However, the advertisement selection processing may be finished in a case other than the above.

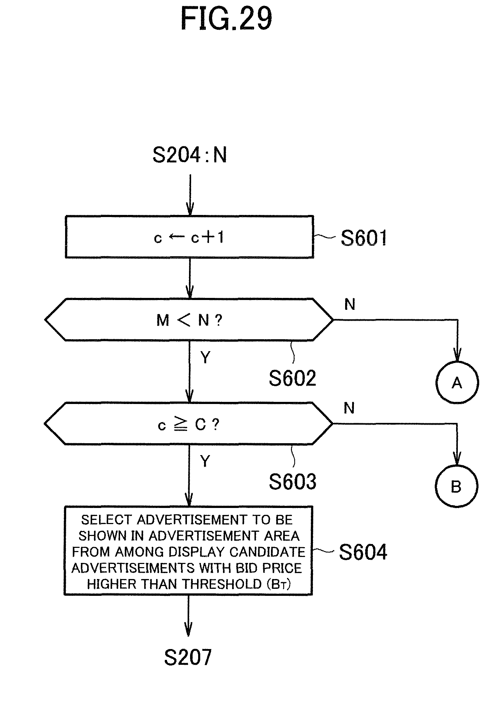

[4-1] For example, the processing shown in FIG. 29 may be executed when it is determined at step S204 in FIG. 19 or FIG. 24 that "M=N" is not held.

That is, when it is determined at step S204 that "M=N" is not held, the control unit adds one to the variable c (S601) in the processing shown in FIG. 29. As described above, in the advertisement selection processing, processing of "comparing a bid price of each advertisement with a threshold, then calculating the number of advertisements with a bid price higher than the threshold, and comparing the number with the number of advertisements 52 to be shown in the advertisement area 50" is repetitively executed while changing the threshold. The variable c serves to count the number of times at which the above described processing is repeated. The variable c is initialized to the initial value (0) at the start of execution of the advertisement selection processing.

After execution of the processing at step S601, the control unit determines whether or not "M<N" is held (S602). That is, the control unit determines whether or not the number (N) of display candidate advertisements obtained at step S203 is larger than the number (M) of advertisements 52 obtained at step S201. When it is determined that "M<N" is not held, that is, when "M>N" is held, the control unit executes the processing at step S301 in FIG. 20 or step S503 in FIG. 25. Meanwhile, when it is determined that "M<N" is held, the control unit determines whether or not the value of the variable c is equal to or larger than a predetermined reference number of times C (S603).

A case in which it is determined that the value of the variable c is equal to or larger than the reference number of times C refers to a case in which the number of times at which the above described processing is repeated reaches the reference number of times. In this case, the control unit stops further changing the threshold (that is, stops further execution of the above described processing), and selects M advertisements to be shown in the advertisement area 50 from among N display candidate advertisements with a bid price higher than the threshold B_{T} at that time (S604).

For example, based on the index value information of each of the N display candidate advertisements with a bid price higher than the threshold B_{T}, the control unit selects the M advertisements 52 to be shown in the advertisement area 50 from among the N display candidate advertisements. In this case, the value in the "evaluation value" field in the index value table, for example, is used as the "index value information". For example, the control unit selects the M display candidate advertisements among the N display candidate advertisements with a bid price higher than the threshold B_{T} as advertisements 52 to be shown in the advertisement area 50, beginning with one with the highest evaluation value. Note that an advertisement effect index value itself may be used instead of the value in the "evaluation value" field. For example, at least one of the values in the "CTR" field, the "CVR" field, and the "purchase price" field in the index value table may be used. After execution of the processing at step S604, the control unit executes the processing at step S207.

Meanwhile, a case in which it is determined that the value of the variable c is not equal to or larger than the reference number of times C refers to a case in which the number of times at which the above described processing is repeated does not reach the reference number of times. In this case, the control unit executes the processing at step S401 in FIG. 21 or step S501 in FIG. 25.

In the above described manner, it is possible to prevent the number of times at which to repeat the processing of "comparing a bid price of each advertisement with a threshold, then calculating the number of advertisements with a bid price higher than the threshold, and comparing the number with the number of advertisements 52 to be shown in the advertisement area 50" from becoming an excessively large number of times. If the number of times at which to repeat execution of the above described processing becomes excessively large, an increased processing load may possibly be resulted. The above described arrangement can avoid such inconvenience.

Note that the processing shown in FIG. 29 may be executed also when it is determined at step S204 in FIG. 27 that "M=N" is not held. In this case, however, the control unit selects at step S604 the M advertisements 52 to be shown in the advertisement area 50 from among the N display candidate advertisements with a bid price higher than the threshold B_{T} and equal to or lower than the upper limit value B_{H}.

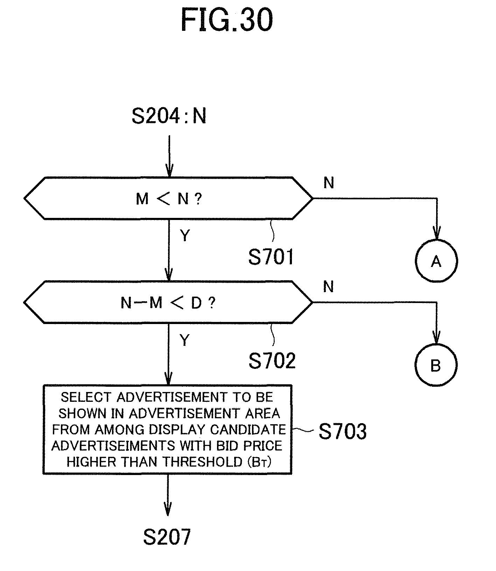

[4-2] For example, when it is determined at step S204 in FIG. 19 or FIG. 24 that "M=N" is not held, the processing shown in FIG. 30 may be executed.

That is, when it is determined at step S204 that "M=N" is not held, the control unit determines whether or not "M<N" is held (S701). That is, the control unit determines whether or not the number (N) of display candidate advertisements obtained at step S203 is larger than the number (M) of advertisements 52 obtained at step S201. When it is determined that "M<N" is not held, that is, when "M>N" is held, the control unit executes the processing at step S301 in FIG. 20 or step S503 in FIG. 25.

Meanwhile, when it is determined that "M<N" is held, the control unit determines whether or not the difference (N-M) between the number (N) of display candidate advertisements obtained at step S203 and the number (M) of advertisements 52 obtained at step S201 is smaller than a predetermined reference value D (S702). Note that the reference value D is set in order to determine whether or not the above described difference (N-M) is relatively small, and accordingly set to a relatively small value.

A case in which it is determined that the above described difference (N-M) is smaller than the reference value D refers to a case in which the difference between the number (M) of advertisements 52 to be shown in the advertisement area 50 and the number (N) of display candidate advertisements with a bid price higher than the threshold B_{T} is relatively small. In the processing shown in FIG. 30, in such a case, it is considered that display candidate advertisements have been sufficiently narrowed down, and execution of the processing of "comparing a bid price of each advertisement with a threshold, then calculating the number of advertisements with a bid price higher than the threshold, and comparing the number with the number of advertisements 52 to be shown in the advertisement area 50" is no longer repeated.

That is, when it is determined that the above described difference (N-M) is smaller than the reference value D, the control unit stops further changing the threshold (that is, stops further execution of the above described processing), and selects M advertisements 52 to be shown in the advertisement area 50 from among N display candidate advertisements with a bid price higher than the threshold B_{T} at the time (S703). The processing at step S703 is similar to that at step S604 in FIG. 29. After execution of the processing at step S703, the control unit executes the processing at step S207.

Meanwhile, when it is determined that the above described difference (N-M) is not smaller than the reference value D, the control unit executes the processing at step S401 in FIG. 21 or step S501 in FIG. 25.

In the above described manner, it is possible to reduce the number of times at which to repeat execution of the processing of "comparing a bid price of each advertisement with a threshold, then calculating the number of advertisements with a bid price higher than the threshold, and comparing the number with the number of advertisements 52 to be shown in the advertisement area 50". With the above, it is possible to reduce a processing load of the advertisement selection processing.

Note that the processing shown in FIG. 30 may be executed also when it is determined at step S204 in FIG. 27 that "M=N" is not held. In this case, however, the control unit selects at step S703 the M advertisements 52 to be shown in the advertisement area 50 from among the N display candidate advertisements with a bid price higher than the threshold B_{T} and equal to or lower than the upper limit value B_{H}.

### [Modified Example 5]

When it is determined at step S401 in FIG. 21 that it is a case in which "M=N" cannot be held, the processing at step S411 may be executed without executing the determination processing at step S408. That is, in a case in which the number (M) of advertisements 52 to be shown in the advertisement area 50 cannot be equal to the number (N) of display candidate advertisements with a bid price higher than the threshold, the M advertisements 52 to be shown in the advertisement area 50 may be selected from among the N display candidate advertisements with a bid price higher than the threshold without determining whether or not it is possible to increase the number of advertisements 52 to be shown in the advertisement area 50.

Similarly, when it is determined at step S501 in FIG. 25 that it is a case in which "M=N" cannot be held, the processing at step S509 may be executed without executing the determination processing at step S506. Further, when it is determined at step S501 in FIG. 28 that it is a case in which "M=N" cannot be held, the processing at step S509a may be executed without executing the determination processing at step S506a.

### [Modified Example 6]

The determination unit 72 may be implemented in the advertisement server 10. For example, the control unit (determination unit 72) of the advertisement server 10 may access the database 12 to obtain a list of advertisement ID's and bid prices of display candidate advertisements from the database 12. Then, the control unit (determination unit 72) of the advertisement server 10 may determine whether or not the bid price of each display candidate advertisement is higher than a threshold based on the list. Further, the control unit of the advertisement server 10 may obtain the number of display candidate advertisements with a bid price higher than the threshold based on the list.

The display position determination unit 80 may be implemented in the e-commerce server 20. For example, the processing at step S207 shown in FIGs 19, 24, and 27 may not be executed, and data on the advertisements selected at step S206, S410, or S411 may be sent from the advertisement server 10 to the e-commerce server 20 at step S104 in FIG. 15. Then, in generation of the product list page data, the control unit (display position determination unit 80) of the e-commerce server 20 may determine a display position of each advertisement in the advertisement area 50. In this case, the control unit (display position determination unit 80) of the e-commerce server 20 may access the database 12 to obtain information (for example, index value information) necessary to determine a display position of each advertisement in the advertisement area 50 from the database 12.

### [Modified Example 7]

Although the evaluation value is stored in the index value table (see FIG. 10) in the above description, the evaluation value may not be stored in the index value table. That is, when an evaluation value is necessary, an evaluation value may be calculated, based on the values in the "CTR", "CVR", and "purchase price" fields and the information shown in FIGs 11 to 13.

Similarly, the advertisement effect index value may not be stored in the index value table. For example, when a click through rate is necessary, a click through rate may be calculated based on the values in the "impression" and "number of clicks" fields. Further, for example, when a conversion rate is necessary, a conversion rate may be calculated based on the values in the "number of accesses" and "number of conversions" fields.

### [Others]

Note that in the e-commerce system 1, not only a material object, such as a bag or the like, but also data such as electronic book data, music data, video data, or the like, may be sold as a product. Further, in the e-commerce system 1, not only commercial transaction between a shop and a consumer but also one between consumers may be conducted.

Further, in the e-commerce system 1, not only a product but also a service may be sold. For example, a coupon for receiving a service in a restaurant, an accommodation facility, or the like, may be sold in the e-commerce system 1.

Further, the present invention is applicable to any system other than an e-commerce system. That is, an advertisement system according to an embodiment of the present invention can be implemented in a system other than an e-commerce system. The present invention is applicable to a system for selecting an advertisement to be shown in an advertisement area in content from among a plurality of advertisements (display candidate advertisements), based on the bid price of each advertisement. For example, the present invention is applicable to a system for selecting an advertisement to be shown in an advertisement area in content showing a list of information items relevant to one or more keywords designated by a user (in other words, a list of information items satisfying a search condition including one or more keywords designated by a user) from among a plurality of advertisements (display candidate advertisements) relevant to the one or more keywords, based on the bid price of each advertisement.

## Claims

1. An advertisement system for providing a user with content in which an advertisement area for showing advertisements is set, the advertisement system comprising:
bid price storage means for storing a bid price designated by an advertiser so as to be correlated to each of a plurality of advertisements that are candidates for the advertisements to be shown in the advertisement area;
determination means for determining whether or not the bid price of an advertisement is higher than a threshold; and
advertisement selection means for selecting advertisements with a bid price higher than the threshold among the plurality of advertisements as the advertisements to be shown in the advertisement area, based on a result of determination by the determination means.

2. The advertisement system according to claim 1, further comprising:
comparison means for comparing a number of advertisements with the bid price higher than the threshold among the plurality of advertisements with a number of the advertisements to be shown in the advertisement area, wherein
the advertisement selection means selects the advertisements with the bid price higher than the threshold among the plurality of advertisements as the advertisements to be shown in the advertisement area, based on a result of comparison by the comparison means.

3. The advertisement system according to claim 2, wherein
in the case where the number of the advertisements with the bid price higher than the threshold among the plurality of advertisements is equal to the number of the advertisements to be shown in the advertisement area, the advertisement selection means selects the advertisements with the bid price higher than the threshold among the plurality of advertisements as the advertisements to be shown in the advertisement area.

4. The advertisement system according to claim 1, further comprising threshold changing means for changing the threshold.

5. The advertisement system according to claim 4, wherein
the threshold changing means changes the threshold in order to have a number of advertisements with the bid price higher than the threshold among the plurality of advertisements to be equal to a number of the advertisements to be shown in the advertisement area.

6. The advertisement system according to claim 4, wherein
in the case where a number of advertisements with the bid price higher than the threshold among the plurality of advertisements is not equal to a number of the advertisements to be shown in the advertisement area, the threshold changing means changes the threshold.

7. The advertisement system according to claim 6, wherein
in the case where the number of the advertisements with the bid price higher than the threshold among the plurality of advertisements is larger than the number of the advertisements to be shown in the advertisement area, the threshold changing means sets a value higher than the threshold as a new threshold.

8. The advertisement system according to claim 7, wherein
in the case where the number of the advertisements with the bid price higher than the threshold among the plurality of advertisements is larger than the number of the advertisements to be shown in the advertisement area, the threshold changing means sets the new threshold, based on a statistical value of the bid prices of the advertisements with the bid price higher than the threshold among the plurality of advertisements.

9. The advertisement system according to claim 7, wherein
in the case where the threshold is set to a first value and a number of advertisements with a bid price higher than the first value among the plurality of advertisements is larger than the number of the advertisements to be shown in the advertisement area, the threshold changing means sets a second value higher than the first value as the new threshold,
in the case where the second value is set as the new threshold and a number of advertisements with a bid price higher than the second value among the plurality of advertisements is smaller than the number of the advertisements to be shown in the advertisement area, the threshold changing means sets a third value lower than the second value and higher than the first value as the new threshold, and
in the case where the third value is set as the new threshold, the advertisement selection means selects advertisements with a bid price higher than the third value among the plurality of advertisements as the advertisements to be shown in the advertisement area, based on a result of comparison between a number of the advertisements with the bid price higher than the third value among the plurality of advertisements and the number of the advertisements to be shown in the advertisement area.

10. The advertisement system according to claim 9, wherein
in the case where the threshold is set to the first value and the number of the advertisements with the bid price higher than the first value among the plurality of advertisements is larger than the number of the advertisements to be shown in the advertisement area, the threshold changing means sets the second value as the new threshold, the second value being a value obtained based on a statistical value of the bid prices of the advertisements with the bid price higher than the first value among the plurality of advertisements, and
in the case where the number of the advertisements with the bid price higher than the second value among the plurality of advertisements is smaller than the number of the advertisements to be shown in the advertisement area, the threshold changing means sets the third value as the new threshold, the third value being a value obtained based on a statistical value of the bid prices of advertisements with a bid price higher than the first value and equal to or lower than the second value among the plurality of advertisements.

11. The advertisement system according to claim 4, wherein
in the case where a number of advertisements with the bid price higher than the threshold among the plurality of advertisements is smaller than a number of the advertisements to be shown in the advertisement area, the threshold changing means sets a value lower than the threshold as a new threshold.

12. The advertisement system according to claim 11, wherein
in the case where the number of the advertisements with the bid price higher than the threshold among the plurality of advertisements is smaller than the number of the advertisements to be shown in the advertisement area, the threshold changing means sets the new threshold based on a statistical value of the bid prices of advertisements with a bid price equal to or lower than the threshold among the plurality of advertisements.

13. The advertisement system according to claim 11, wherein
in the case where the threshold is set to a first value and a number of advertisements with a bid price higher than the first value among the plurality of advertisements is smaller than the number of the advertisements to be shown in the advertisement area, the threshold changing means sets a second value lower than the first value as the new threshold,
in the case where the second value is set as the new threshold and a number of advertisements with a bid price higher than the second value among the plurality of advertisements is larger than the number of the advertisements to be shown in the advertisement area, the threshold changing means sets a third value higher than the second value and lower than the first value as the new threshold, and
in the case where the third value is set as the new threshold, the advertisement selection means selects advertisements with a bid price higher than the third value among the plurality of advertisements as the advertisements to be shown in the advertisement area, based on a result of comparison between a number of the advertisements with the bid price higher than the third value among the plurality of advertisements and the number of the advertisements to be shown in the advertisement area.

14. The advertisement system according to claim 13, wherein in the case where the threshold is set to the first value and the number of the advertisements with the bid price higher than the first value among the plurality of advertisements is smaller than the number of the advertisements to be shown in the advertisement area, the threshold changing means sets the second value as the new threshold, the second value being a value obtained based on a statistical value of the bid prices of advertisements with a bid price equal to or lower than the first value among the plurality of advertisements, and
in the case where the number of the advertisements with the bid price higher than the second value among the plurality of advertisements is larger than the number of the advertisements to be shown in the advertisement area, the threshold changing means sets the third value as the new threshold, the third value being a value obtained based on a statistical value of the bid prices of advertisements with a bid price higher than the second value and equal to or lower than the first value among the plurality of advertisements.

15. The advertisement system according to claim 4, further comprising means for setting an initial value of the threshold based on a statistical value of the bid prices of the plurality of advertisements.

16. The advertisement system according to claim 4, further comprising index value information storage means for storing index value information concerning an advertisement effect index value so as to be correlated to each of the plurality of advertisements, wherein
in the case where the threshold changing means changes the threshold and a number of advertisements with the bid price higher than the threshold among the plurality of advertisements is larger than a number of the advertisements to be shown in the advertisement area, the advertisement selection means selects the advertisements to be shown in the advertisement area from among the advertisements with the bid price higher than the threshold among the plurality of advertisements, based on the index value information on each of the advertisements with the bid price higher than the threshold among the plurality of advertisements.

17. The advertisement system according to claim 16, wherein
the advertisement effect index value includes at least one of a click through rate, a conversion rate, and a total price of a product or a service actually bought via an advertisement shown in the advertisement area in the content.

18. The advertisement system according to claim 2, further comprising means for increasing the number of the advertisements to be shown in the advertisement area to at least the number of the advertisements with the bid price higher than the threshold among the plurality of advertisements, in the case where a number of the advertisements with the bid price higher than the threshold among the plurality of advertisements is larger than a number of the advertisements to be shown in the advertisement area, a number of advertisements with a lowest bid price among the advertisements with the bid price higher than the threshold is two or more, and a number of advertisements other than the advertisement with the lowest bid price among the advertisements with the bid price higher than the threshold is smaller than the number of the advertisements to be shown in the advertisement area,.

19. The advertisement system according to claim 2, wherein
a first advertisement area and a second advertisement area are set in the content,
the comparison means compares a number of advertisements with a bid price higher than a first threshold among the plurality of advertisements and a number of the advertisements to be shown in the first advertisement area,
the advertisement selection means selects the advertisements with the bid price higher than the first threshold among the plurality of advertisements as the advertisements to be shown in the first advertisement area, based on a result of comparison by the comparison means,
the advertisement system further comprises means for setting a value lower than the first threshold as a second threshold, in the case where the advertisements with the bid price higher than the first threshold among the plurality of advertisements is selected as the advertisements to be shown in the first advertisement area,
in the case where the second threshold is set, the comparison means compares a number of advertisements with a bid price higher than the second threshold and equal to or lower than the first threshold among the plurality of advertisements with a number of the advertisements to be shown in the second advertisement area, and
the advertisement selection means selects the advertisements with the bid price higher than the second threshold and equal to or lower than the first threshold among the plurality of advertisements as the advertisements to be shown in the second advertisement area, based on a result of comparison by the comparison means.

20. The advertisement system according to claim 19, wherein
the advertisement system further comprises means for changing the first threshold, based on a result of comparison between the number of advertisements with the bid price higher than the first threshold among the plurality of advertisements and the number of the advertisements to be shown in the first advertisement area,
in the case where the first threshold is changed, the comparison means compares a number of advertisements with the bid price higher than the first threshold among the plurality of advertisements and the number of advertisements to be shown in the first advertisement area,
the advertisement selection means selects the advertisements with the bid price higher than the first threshold among the plurality of advertisements as the advertisements to be shown in the first advertisement area, based on a result of comparison by the comparison means in the case where the first threshold is changed,
the advertisement system further comprises means for changing the second threshold, based on a result of comparison between the number of advertisements with a bid price higher than the second threshold and equal to or lower than the first threshold among the plurality of advertisements and the number of the advertisements to be shown in the second advertisement area,
in the case where the second threshold is changed, the comparison means compares a number of advertisements with the bid price higher than the second threshold and equal to or lower than the first threshold among the plurality of advertisements and the number of the advertisements to be shown in the second advertisement area, and
the advertisement selection means selects the advertisements with the bid price higher than the second threshold and equal to or lower than the first threshold among the plurality of advertisements as the advertisements to be shown in the second advertisement area, based on a result of comparison by the comparison means in the case where the second threshold is changed.

21. The advertisement system according to claim 1, wherein
the advertisement system further comprises index value information storage means for storing index value information concerning an advertisement effect index value so as to be correlated to each of the plurality of advertisements,
the advertisements selected by the advertisement selection means from among the plurality of advertisements are shown in the advertisement area, and
the advertisement system further comprises display position determination means for determining a display position in the advertisement area of each of the advertisements selected by the advertisement selection means, based on the index value information of each of the plurality of advertisements selected by the advertisement selection means.

22. The advertisement system according to claim 21, wherein
the advertisement effect index value includes at least one of a click through rate, a conversion rate, and a total price of a product or a service actually bought via an advertisement shown in the advertisement area in the content.

23. A control method for an advertisement system for providing a user with content in which an advertisement area is set, the control method comprising:
a determination step of determining whether or not a bid price of an advertisement is higher than a threshold, based on content stored in bid price storage means for storing a bid price of each of a plurality of advertisements that are candidates for advertisements to be shown in the advertisement area; and
an advertisement selection step of selecting advertisements with a bid price higher than the threshold among the plurality of advertisements as the advertisements to be shown in the advertisement area, based on a result of determination at the determination step.

24. An advertisement control device for selecting advertisements to be shown in an advertisement area set in content from among a plurality of advertisements, the advertisement control device comprising:
means for accessing bid price storage means for storing a bid price of each of a plurality of advertisements; and
advertisement selection means for selecting advertisements with a bid price higher than a threshold among the plurality of advertisements as the advertisements to be shown in the advertisement area, based on a result of determination as to whether or not the bid price of the advertisement is higher than the threshold.

25. A control method for an advertisement control device for selecting advertisements to be shown in an advertisement area set in content from among a plurality of advertisements, the control method comprising:
a step of accessing bid price storage means for storing a bid price of each of a plurality of advertisements; and
an advertisement selection step of selecting advertisements with a bid price higher than a threshold among the plurality of advertisements as the advertisements to be shown in the advertisement area, based on a result of determination as to whether or not the bid price of the advertisement is higher than the threshold.

26. A program for causing a computer to function as an advertisement control device for selecting advertisements to be shown in an advertisement area set in content from among a plurality of advertisements, the program for causing the computer to function as:
means for accessing bid price storage means for storing a bid price of each of a plurality of advertisements; and
advertisement selection means for selecting advertisements with a bid price higher than a threshold among the plurality of advertisements as the advertisements to be shown in the advertisement area, based on a result of determination as to whether or not the bid price of the advertisement is higher than the threshold.

27. A computer readable information storage medium storing the program according to claim 26.
